# EUROPEAN PATENT APPLICATION

(11) **EP 2 498 468 A1**
(43) Date of publication of application: **12.09.2012**
(21) Application number: 10827897.9
(22) Date of filing: 02.11.2010
(51) Int. Cl.: H04L 29/06

(54) **METHOD FOR MANAGING LOCAL INTERNET PROTOCOL (IP) ACCESS CONNECTIONS**

(30) Priority: 03.11.2009 CN 200910209650; 05.02.2010 CN 201010123266
(71) Applicant: ZTE Corporation, Shenzhen, Guangdong 518057 (CN)
(72) Inventor: ZHOU, Na, Shenzhen Guangdong 518057 (CN); HUO, Yuzhen, Shenzhen Guangdong 518057 (CN); LIANG, Shuang, Shenzhen Guangdong 518057 (CN); WANG, Jing, Shenzhen Guangdong 51805 (CN)
(74) Representative: Bongiovanni, Simone
(86) International application number: PCT/CN2010/078353
(87) International publication number: WO 2011/054283

(57) **Abstract**

Disclosed is a method for managing local IP access connection, wherein the method comprises: determining whether a local IP access connection supports mobility; if yes, then processing the local IP access connection, wherein the processing includes at least one of the following: activate, establish and update. According to the present invention, the source/target mobility management entity or source/target RAN node determines whether a local IP access connection supports mobility according to a CSG identifier or local gateway information, which thus achieves the management operation on the local IP access connection, avoids the waste of system resources and the increasing of system burden and improves the processing efficiency of the mobile communication system.

## Description

### Field of the Invention

The present invention relates to the communication field, and particularly to a method for managing local IP access connection.

### Background of the Invention

The 3rd Generation Partnership Project (abbreviated as 3GPP) evolved packet system (abbreviated as EPS) consists of an evolved universal terrestrial radio access network (abbreviated as E-UTRAN), a mobility management entity (abbreviated as MME), a serving gateway (abbreviated as S-GW), a packet data network gateway (abbreviated as P-GW or PDN GW), a home subscriber server (abbreviated as HSS), a 3GPP authentication authorization and accounting (abbreviated as AAA) server, a policy and charging rules function (abbreviated as PCRF) entity and other support nodes.

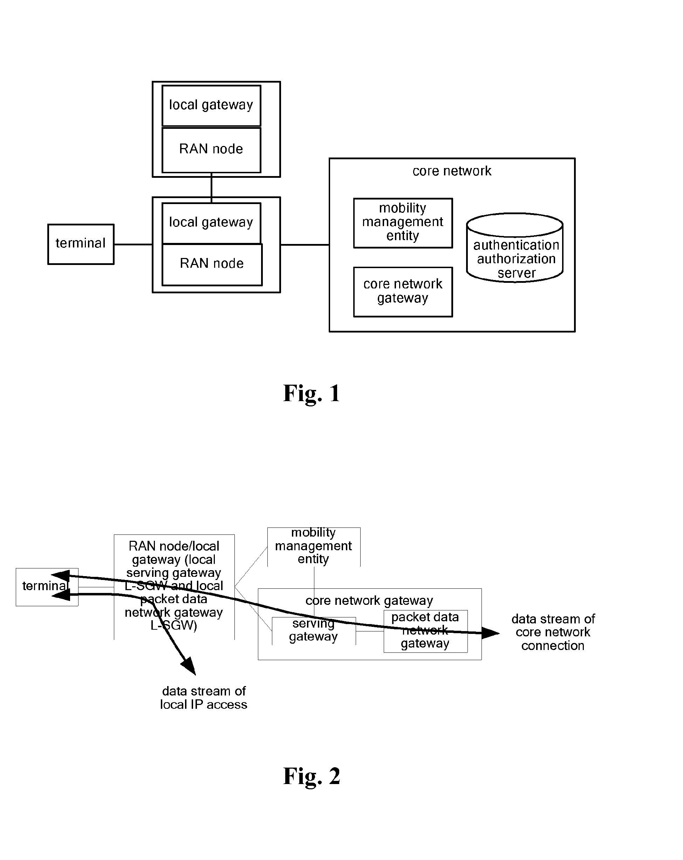

Fig. 1 is a schematic diagram of the architecture of an EPS system according to relevant art. The mobility management entity is responsible for relevant work of the control plane such as mobility management, processing of non-access-layer signaling and management of user mobile management context. S-GW is an access gateway device connected to the E-UTRAN, it forwards data between the E-UTRAN and P-GW and, it is responsible for caching the paging waiting data. P-GW is a boundary gateway between EPS and packet data network (abbreviated as PDN) and responsible for functions such as the PDN connection establishment and forwarding data between EPS and PDN. Both S-GW and P-GW belong to core network gateway

In addition to supporting to access the mobile core network, the mobile communication system (including home (e)nodeB system) can also support the function of local IP access. Under the condition that the RAN node possesses the ability of local IP access and the user subscription allows local IP access, the local access to other IP devices of household network or the Internet by the terminals can be achieved.

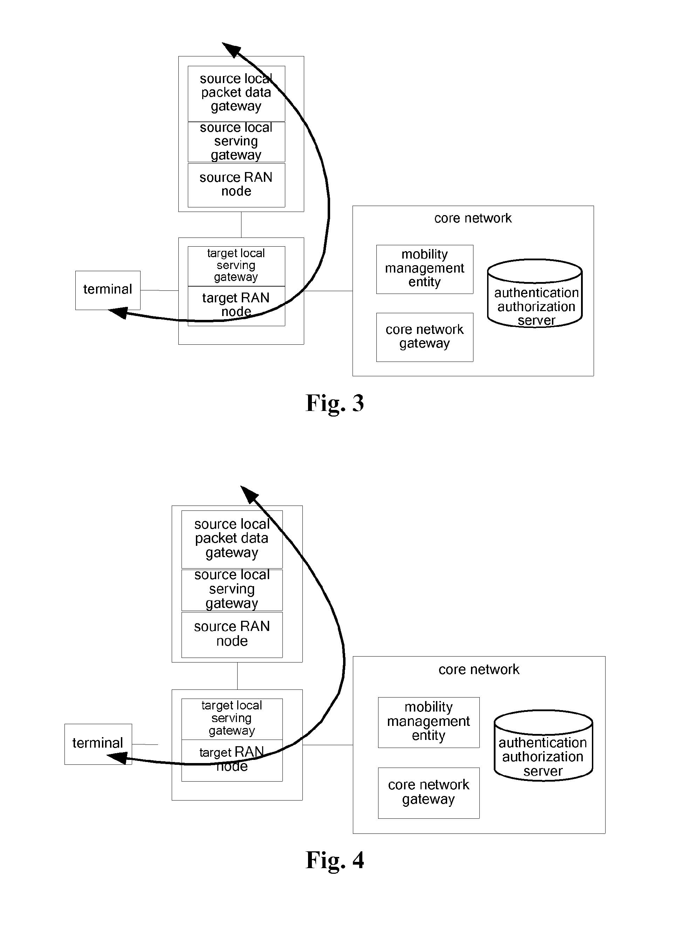

The implementation of local IP access can use a plurality of connection establishment modes: functions of core network access and local IP access can be simultaneously achieved by establishing a connection, and in this case it is unnecessary to add the local gateway function on the RAN node or home (e)nodeB gateway; and effective support can be also provided to the local IP access technology by adding a local gateway which is used as a gateway for the local access to an external network (such as Internet) and provides functions of address allocation, charging, packet package filtering, policy control, data streaming, NAS/S1-AP/RANAP (Radios Access Network Application Part)/GTP (General Tunneling Protocol)/PMIP (Proxy Mobile IP)/MIP (Mobile IP) message parsing, NAT (Network Address Translation), routing and execution of local IP access policy. The local gateway can be combined with or separated from the RAN node (as shown in Fig. 1). Fig. 2 to Fig.5 show data streams of local IP access and core network connection in the radio communication system shown in Fig. 1 under the mobile communication network architecture based on LTE (Long Term Evolution).

Based on the scenario of the system architecture in Fig. 1, during the handover of a terminal, in the situation where the local IP access connection does not support mobility (for instance, the local gateway changes or the CSG (Closed Subscriber Group) identifier does not support mobility), the data of the terminal cannot be transmitted to the source local gateway via the target RAN node. Thus, it not only causes resource waste and increasing of system processing burden but also causes that the local IP data cannot be transmitted.

Regarding the problem in relevant art of how to determine whether the local IP access connection supports mobility, currently still no effective solution has been proposed.

### Summary of the Invention

The present invention is proposed regarding the problem in relevant art of how to determine whether the local IP access connection supports mobility. For this end, the main object of the present invention is to provide a method for managing local IP access connection so as to solve at least one of the above problems.

In order to achieve the above object, a method for managing local IP access connection is provided according to one aspect of the present invention.

The method for managing local IP access connection according to one aspect of the present invention comprises: determining whether a local IP access connection supports mobility; and if yes, then processing the local IP access connection, wherein the processing includes at least one of: activate, establish and update.

Preferably, determining whether a local IP access connection supports mobility comprises: determining whether the local IP access connection supports mobility according to a CSG identifier or local gateway information.

According to the present invention, the source/target mobility management entity or source/target RAN node determines whether the local IP access connection supports mobility according to the CSG identifier or local gateway information. It achieves the management operation on the local IP access connection, avoids the waste of system resources and the increasing of system burden, and improves the processing efficiency of the mobile communication system.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of the architecture of an EPS system according to relevant art;
Fig. 2 is a schematic diagram of the data stream of local IP access according to relevant art;
Fig. 3 is another schematic diagram of the data stream of local IP access according to relevant art;
Fig. 4 is yet another schematic diagram of the data stream of local IP access according to relevant art;
Fig. 5 is yet another schematic diagram of the data stream of local IP access according to relevant art;
Fig. 6 is a flowchart of a method for managing local IP access connection according to the embodiments of the present invention;
Fig. 7 is a flowchart according to embodiment 1 of the present invention;
Fig. 8 is a flowchart according to embodiment 2 of the present invention;
Fig. 9 is a flowchart according to embodiment 3 of the present invention;
Fig. 10 is a flowchart according to embodiment 4 of the present invention;
Fig. 11 is a flowchart according to embodiment 5 of the present invention;
Fig. 12 is a flowchart according to embodiment 6 of the present invention;
Fig. 13 is a flowchart according to embodiment 7 of the present invention;
Fig. 14 is a flowchart according to embodiment 8 of the present invention;
Fig. 15 is a flowchart according to embodiment 9 of the present invention;
Fig. 16 is a flowchart according to embodiment 10 of the present invention;
Fig. 17 is a flowchart according to embodiment 11 of the present invention;
Fig. 18 is a flowchart according to embodiment 12 of the present invention;
Fig. 19 is a flowchart according to embodiment 13 of the present invention.
Fig. 20 is a flowchart according to embodiment 14 of the present invention.
Fig. 21 is a flowchart according to embodiment 15 of the present invention.
Fig. 22 is a flowchart according to embodiment 16 of the present invention;
Fig. 23 is a flowchart according to embodiment 17 of the present invention;
Fig. 24 is a flowchart according to embodiment 18 of the present invention;
Fig. 25 is a flowchart according to embodiment 19 of the present invention; and
Fig. 26 is a flowchart according to embodiment 20 of the present invention.

### Detailed Description of Embodiments

The present invention will be described hereinafter in detail with reference to the drawings and in conjunction with the embodiments. It needs to note that the embodiments of the present application and the features in the embodiments can be combined with each other if there is no conflict.

Regarding the problem in relevant art of how to determine whether the local IP access connection supports mobility, a method for managing local IP access connection is proposed in the present invention. According to the solution of the present invention, the source/target mobility management entity or source/target RAN node determines whether the local IP access connection supports mobility according to the CSG identifier or local gateway information. Thus, it achieves the management operation on the local IP access connection, avoids the waste of system resources and the increasing of system burden, and improves the processing efficiency of the mobile communication system.

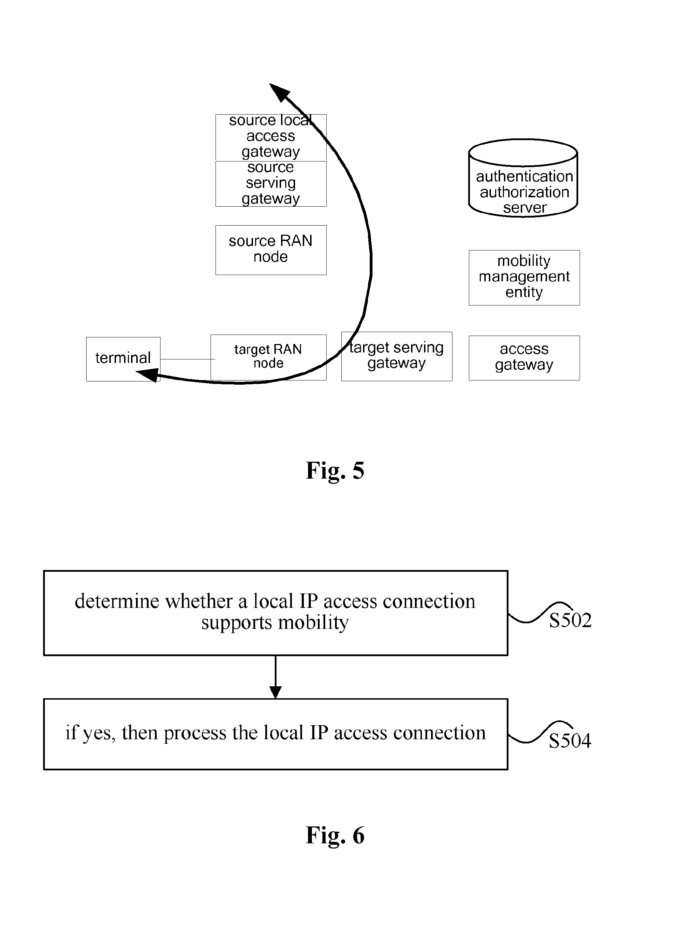

A method for managing local IP access connection is provided according to the embodiments of the present invention, and as shown in Fig. 6, the method comprises the following steps.

S502: it is determined whether a local IP access connection supports mobility.

S504: if it is determined that the local IP access connection supports mobility, then the local IP access connection is processed, wherein the processing includes at least one of: activate, establish and update.

Furthermore, when requesting a service, the mobility management entity or RAN node determines that the local IP access supports mobility according to the local gateway information or CSG identifier, and then activate/establish/update the local IP access connection, and if the mobility is not supported, then disconnect the local IP access connection.

Furthermore, when updating the location, the mobility management entity or RAN node determines that the local IP access supports mobility according to the local gateway information or CSG identifier, and then activate/establish/update the local IP access connection, and if mobility is not supported, then disconnect the local IP access connection.

Furthermore, during the handover, if mobility is not supported, then the source mobility management entity sends an instruction to the target mobility management entity that the local IP access connection is invalid. The instruction can be carried in a Forward Relocation Complete acknowledge message and can be carried in a forward relocation acknowledge message. The target mobility management entity disconnects the local IP access connection information to the target RAN node.

Furthermore, the location update can be tracking area update and routing area update.

Furthermore, the RAN node can be base station, home (e)nodeB, home (e)nodeB gateway, RNC (radio network controller). The mobility management entity can be MME (mobility management entity), MSC (mobile switching center), SGSN (serving GPRS support node), and home (e)nodeB gateway The local gateway can be L-SGW and L-PGW, can be separate L-PGW, can be L-GGSN and L-SGSN, and can be separate L-GGSN. The core network gateway can be S-GW, P-GW, SGSN, and GGSN. The authentication authorization server can be a subscription profile repository.

Furthermore, the target local gateway information is the local gateway information supported by the target RAN node/target home (e)nodeB gateway The target local gateway information can be local gateway identifier and IP address of the local gateway.

Furthermore, the Local IP access can be a local IP access to residential IP network, a local IP access to enterprise IP network, a local IP access to Internet, an Internet offload and a selected IP traffic offload.

Furthermore, the method for determining whether mobility is supported is as follows: check whether the local gateway information of the user local IP access connection is the same as the target local gateway information; and if same, then it is deemed that the local IP access connection supports mobility, and in this case it needs to activate/establish/update the core network connection and local IP access connection; if different, then the local IP access connection does not support mobility, and in this case it only needs to activate/establish/update the core network connection and disconnect the local IP access connection of the user.

Alternatively, the method for determining whether mobility is supported is as follows: if the CSG identifier changes, then the mobility management entity deems that mobility is not supported, or the mobility management entity determines whether the initial CSG identifier and the target CSG identifier of the user belong to a CSG list which supports mobility (if yes, then it is deemed that mobility is supported); and if the CSG identifier does not change, then the mobility management entity deems that mobility is supported or determines whether this CSG identifier supports mobility. If mobility is supported, then activate/establish/update the core network connection and local IP access connection; otherwise, only activate/establish/update the core network connection and disconnect the local IP access connection.

Alternatively, the method for determining whether mobility is supported is as follows: determining whether there is a connection or interface between a target serving gateway and a source local access gateway, or, determining whether there is a connection or interface between a target RAN node or a target home (e)nodeB gateway and a source local gateway; if yes, then it is determined that the local IP access connection supports mobility.

Furthermore, in the above preferred embodiments, after determining whether the local IP access connection supports mobility, it further comprises: if it is determined that the local IP access connection does not support mobility, then releasing the local IP access connection.

The implementing process of the embodiments of the present invention will be described in detail in conjunction with examples hereinafter.

The following embodiments describe application scenarios based on the E-UTRAN (Evolved Universal Terrestrial Radio Access Network) system.

### Embodiment 1

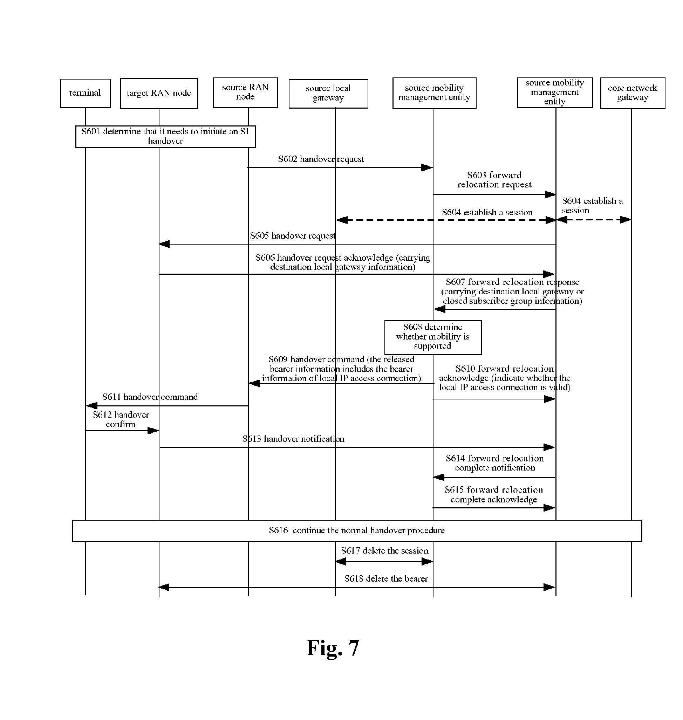

Fig. 7 is a flowchart of the handover process of a terminal based on the system shown in Fig. 1 of the present invention. In this embodiment, the source mobility management entity determines whether mobility is supported according to the local gateway information or closed subscriber group (CSG) information, and newly adds a forward relocation acknowledge message. The specific steps are described as follows.

Step S601: the RAN node determines that it needs to initiate an S1 handover.

Step S602: the source RAN node sends a handover required to the source mobility management entity

Step S603: the source mobility management entity sends a forward relocation request message to the target mobility management entity

Step S604: the target mobility management entity can initiate a session establishment procedure of the core network and local IP access connection toward the core network gateway

Step S605: the target mobility management entity requests the target RAN node to perform handover.

Step S606: the target RAN node responds to the target mobility management entity a handover request acknowledge message, which can carry target local gateway information, i.e. the local gateway information supported by the target RAN node, such as local gateway identifier and IP address. Alternatively, this handover request acknowledge message can carry target CSG information, i.e. the CSG identifier information of the user at the target RAN node.

In addition, the way for the target mobility management entity to acquire the target local gateway information can also be as follows: the mobility management entity can also inquire to obtain the local gateway information via a DNS (domain name system) server or a management server according to the identifier of the RAN node and/or the established connection type and/or relevant subscription information of local IP access. For example, select a SGW or PGW corresponding to the identifier of the RAN node via the DNS server or management server, or select a SGW or PGW compatible with the established connection type and/or subscription information, or select a SGW or PGW corresponding to the identifier of the RAN node and compatible with the established connection type and/or subscription information.

Step S607: the target mobility management entity sends a forward relocation response message to the source mobility management entity, which carries the target local gateway information or the target CSG information.

Step S608: the source mobility management entity determines whether mobility is supported.

The method for determining whether mobility is supported is as follows: check whether the local gateway information of the local IP access connection for the user is the same as the target local gateway information; and if same, then it is deemed that the local IP access connection supports mobility, and in this case it needs to activate/establish/update the core network connection and local IP access connection; if different, then the local IP access connection does not support mobility, and in this case it only needs to activate/establish/update the core network connection and disconnect the local IP access connection of the user.

Alternatively, the method for determining whether mobility is supported is as follows: if the CSG identifier changes, then the mobility management entity deems that mobility is not supported, or the source mobility management entity determines whether the initial CSG identifier and the target CSG identifier of the user belong to a CSG list which supports mobility (if yes, then it is deemed that mobility is supported); and if the CSG identifier does not change, then the mobility management entity deems that mobility is supported or determines whether this CSG identifier supports mobility. If mobility is supported, then activate/establish/update the core network connection and local IP access connection; otherwise, only activate/establish/update the core network connection and disconnect the local IP access connection.

Preferably, the local gateway information or the initial CSG identifier of the user local IP access connection is stored in the mobility management entity when the user establishes the local IP access connection.

Step S609: the source RAN node sends a handover command to the source RAN node.

If mobility is not supported, then the bearer information, which is carried in this handover command and needs to be released, i.e. bearers to release, includes the bearer information of the local IP access bearers.

Step S610: the source mobility management entity sends a forward relocation acknowledge to the target mobility management entity to indicate whether the local IP access connection is valid. And, step S611 can be performed after step S609.

The method for instructing that the local IP access connection is valid is as follows: carrying an instruction that the local IP access connection is valid or not carrying an instruction that the local IP access connection is invalid, carrying the acceptable bearer information which includes the bearer of local IP access connection, and carrying the unacceptable bearer information which does not include the bearer of local IP access connection.

The method for instructing that the local IP access connection is invalid is as follows: carrying an instruction that the local IP access connection is invalid or not carrying an instruction that the local IP access connection is valid, carrying the acceptable bearer information which does not include the bearer of local IP access connection, and carrying the unacceptable bearer information which includes the bearer of local IP access connection.

Step S611: the source RAN node sends a handover command to the terminal.

Step S612: the terminal initiates a handover confirm message to the target RAN node.

Step S613: the target RAN node notifies the target mobility management entity to carry out handover.

Step S614: the target RAN node sends a Forward Relocation Complete Notification message to the source mobility management entity.

Step S615: the source RAN node sends a Forward Relocation Complete acknowledge message to the target mobility management entity.

Step S616: continue the normal handover procedure.

Step 5617: if mobility is not supported, then the source mobility management entity initiates a deletion procedure for local IP access connection toward the source local gateway. This step can be performed after step S608.

Step S618: if mobility is not supported, then the target mobility management entity initiates a deactivation procedure for local IP access bearers toward the target RAN node. This step can be performed after step S610.

### Embodiment 2

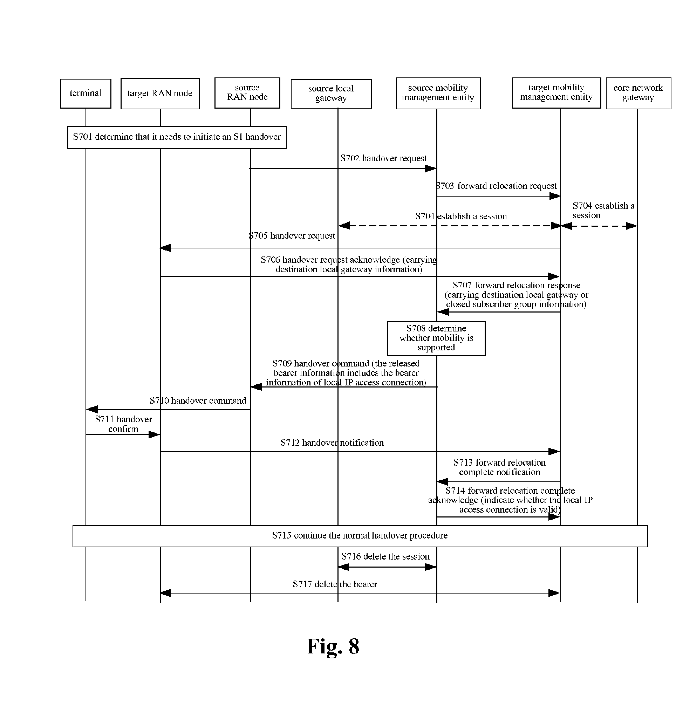

Fig. 8 is a flowchart of the handover process of a terminal based on the system shown in Fig. 1 of the present invention. In this embodiment, the source mobility management entity determines whether mobility is supported according to the local gateway information or CSG information, and modifies the Forward Relocation Complete acknowledge message. The specific steps are described as follows.

Step S701: the RAN node determines that it needs to initiate an S1 handover.

Step S702: the source RAN node sends a handover required to the source mobility management entity.

Step S703: the source mobility management entity sends a forward relocation request message to the target mobility management entity

Step S704: the target mobility management entity can initiate a session establishment procedure of the core network and local IP access connection toward gateway.

Step S705: the target mobility management entity requests the target RAN node to perform handover.

Step S706: the target RAN node responds to the target mobility management entity a handover request acknowledge message. The message can carry target local gateway information, i.e. the local gateway information supported by the target RAN node, such as local gateway identifier and IP address. Alternatively, this handover request acknowledge message can carry the target CSG information, i.e. the CSG identifier information of the user at the target RAN node.

In addition, the way of the target mobility management entity acquiring the target local gateway information can also be as follows: the mobility management entity can also inquire to obtain the local gateway information via a DNS (domain name system) server or a management server according to the identifier of the RAN node and/or the established connection type and/or relevant subscription information of local IP access. For example, select a SGW or PGW corresponding to the identifier of the RAN node via the DNS server or management server, or select a SGW or PGW compatible with the established connection type and/or subscription information, or select a SGW or PGW corresponding to the identifier of the RAN node and compatible with the established connection type and/or subscription information.

Step S707: the target mobility management entity sends a forward relocation response message to the source mobility management entity, which message carries the target local gateway information or the target CSG information.

Step S708: the source mobility management entity determines whether mobility is supported.

The method for determining whether mobility is supported is as follows: check whether the local gateway information of the user local IP access connection is the same as the target local gateway information, and if same, then it is deemed that the local IP access connection supports mobility, and in this case it needs to activate/establish/update the core network connection and local IP access connection; if different, then the local IP access connection does not support mobility, and in this case it only needs to activate/establish/update the core network connection and disconnect the local IP access connection of the user.

Alternatively, the method for determining whether mobility is supported is as follows: if the CSG identifier changes, then the mobility management entity deems that mobility is not supported, or the mobility management entity determines whether the initial CSG identifier and the target CSG identifier of the user belong to a CSG list which supports mobility (if yes, then it is deemed that mobility is supported); and if the CSG identifier does not change, then the mobility management entity deems that mobility is supported or determines whether this CSG identifier supports mobility. If mobility is supported, then activate/establish/update the core network connection and local IP access connection; otherwise, only activate/establish/update the core network connection and disconnect the local IP access connection.

The local gateway information or the initial CSG identifier of the user local IP access connection is stored in the mobility management entity when the user establishes the local IP access connection.

Step S709: the source RAN node sends a handover command to the source RAN node.

If mobility is not supported, then the bearer information, which is carried in this handover command and needs to be released, i.e. bearers to release, includes the bearer information of the local IP access connection.

Step S710: the source RAN node sends a handover command to the terminal.

Step S711: the terminal initiates a handover confirm message toward the target RAN node.

Step S712: the target RAN node notifies the target mobility management entity to carry out handover.

Step S713: the target RAN node sends a Forward Relocation Complete Notification message to the source mobility management entity.

Step S714: the source RAN node responds a Forward Relocation Complete acknowledge message to the target mobility management entity to indicate whether the local IP access connection is valid.

The method for instructing that the local IP access connection is valid is as follows: carrying an instruction that the local IP access connection is valid or not carrying an instruction that the local IP access connection is invalid, carrying the acceptable bearer information which includes the bearer of local IP access connection, and carrying the unacceptable bearer information which does not include the bearer of local IP access connection.

The method for instructing that the local IP access connection is invalid is as follows: carrying an instruction that the local IP access connection is invalid or not carrying an instruction that the local IP access connection is valid, carrying the acceptable bearer information which does not include the bearer of local IP access connection, and carrying the unacceptable bearer information which includes the bearer of local IP access connection.

Step S715: continue the normal handover procedure.

Step S716: if mobility is not supported, then the source mobility management entity initiates a deletion procedure for local IP access connection toward the source local gateway. This step can be performed after step S708.

Step S717: if mobility is not supported, then the target mobility management entity initiates a deactivation procedure for local IP access bearers toward the target RAN node. This step can be performed after step S714.

### Embodiment 3

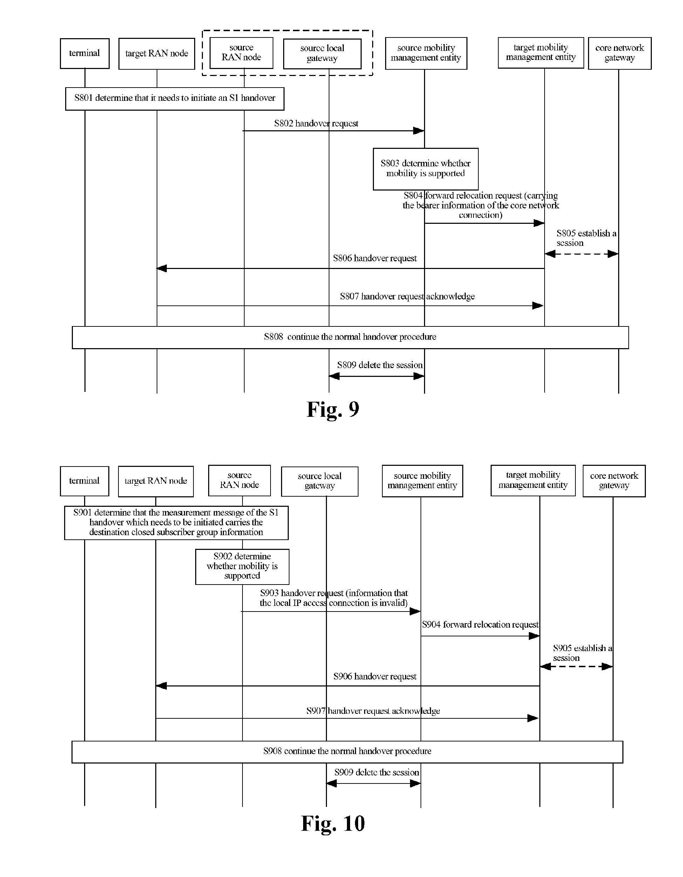

Fig. 9 is a flowchart of the handover process of a terminal based on the system shown in Fig. 1 of the present invention. In this embodiment, the source mobility management entity determines whether mobility is supported according to the CSG information. The specific steps are described as follows.

Step S801: the RAN node determines that it needs to initiate an S1 handover.

Step S802: the source RAN node sends a handover request to the source mobility management entity, which request carries the target CSG identifier.

Step 5803: the source mobility management entity determines whether mobility is supported.

The method for determining whether mobility is supported is as follows: if the CSG identifier changes, then the mobility management entity deems that mobility is not supported, or the mobility management entity determines whether the initial CSG identifier and the target CSG identifier of the user belong to a CSG list which supports mobility (if yes, then it is deemed that mobility is supported); and if the CSG identifier does not change, then the mobility management entity deems that mobility is supported or determines whether this CSG identifier supports mobility. If mobility is supported, then activate/establish/update the core network connection and local IP access connection; otherwise, only activate/establish/update the core network connection and disconnect the local IP access connection.

The initial CSG identifier of the user is stored in the mobility management entity when the user establishes the local IP access connection.

Step S804: the source mobility management entity sends a forward relocation request message to the target mobility management entity.

If mobility is not supported, then this message does not carry the bearer information of the local IP access connection.

Step S805: the target mobility management entity can initiate a session establishment procedure of the core network toward the core network gateway.

Step S806: the target mobility management entity requests the target RAN node to perform handover.

Step S807: the target RAN node responds a handover request acknowledge message to the target mobility management entity.

Step S808: continue the normal handover procedure.

Step S809: if mobility is not supported, then the source mobility management entity initiates a deletion procedure for local IP access connection toward the source local gateway. This step can be performed after step S803.

### Embodiment 4

Fig. 10 is a flowchart of the handover process of a terminal based on the system shown in Fig. 1 of the present invention. In this embodiment, the source RAN node determines whether mobility is supported according to the CSG information. The specific steps are described as follows.

Step S901: the RAN node determines that it needs to initiate an S1 handover. The message sent by the terminal to the source RAN node carries the target CSG information.

Step S902: the source RAN node determines whether mobility is supported.

The method for determining whether mobility is supported is as follows: if the CSG identifier changes, then the source RAN node deems that mobility is not supported, or the source RAN node determines whether the initial CSG identifier and the target CSG identifier of the user belong to a CSG list which supports mobility (if yes, then it is deemed that mobility is supported); and if the CSG identifier does not change, then the source RAN node deems that mobility is supported or determines whether this CSG identifier supports mobility. If mobility is supported, then the source RAN node can notify the source mobility management entity or target mobility management entity to activate/establish/update the core network connection and local IP access connection; otherwise, only activate/establish/update the core network connection, and disconnect the local IP access connection.

Step S903: the source RAN node sends a handover required to the source mobility management entity.

If mobility is not supported, then this message carries information that the local IP access connection is invalid.

Step S904: the source mobility management entity checks that the local IP access connection is invalid, and then the forward relocation request message sent to the target mobility management entity does not carry the local IP access connection information.

Step S905: the target mobility management entity can initiate a session establishment procedure of the core network toward the gateways.

Step S906 the target mobility management entity requests the target RAN node to perform handover.

Step S907: the target RAN node responds a handover request acknowledge message to the target mobility management entity.

Step S908: continue the normal handover procedure.

Step S909: if mobility is not supported, then the source mobility management entity initiates a deletion procedure for local IP access connection toward the source local gateway. This step can be performed after step S902.

### Embodiment 5

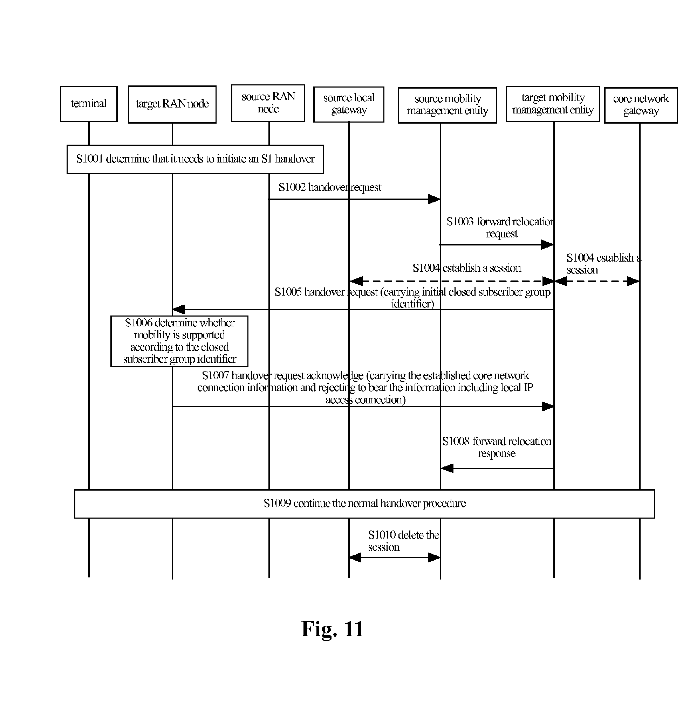

Fig. 11 is a flowchart of the handover process of a terminal based on the system shown in Fig. 1 of the present invention. In this embodiment, the target RAN node determines whether mobility is supported according to the CSG information. The specific steps are described as follows.

Step S1001: the RAN node determines that it needs to initiate an S1 handover.

Step S1002: the source RAN node sends a handover required to the source mobility management entity.

Step S1003: the source mobility management entity sends a forward relocation request message to the target mobility management entity.

Step S1004: the target mobility management entity can initiate a session establishment procedure of the core network and local IP access connection toward the gateways.

Step S1005: the target mobility management entity requests the target RAN node to perform handover, which carries the initial CSG identifier

Step S1006: the target RAN node determines whether mobility is supported.

The method for determining whether mobility is supported is as follows: if the CSG identifier changes, then the target RAN node deems that mobility is not supported, or the target RAN node determines whether the initial CSG identifier and the target CSG identifier of the user belong to a CSG list which supports mobility (if yes, then it is deemed that mobility is supported); and if the CSG identifier does not change, then the target RAN node deems that mobility is supported or determines whether this CSG identifier supports mobility. If mobility is supported, then the target RAN node can notify the source mobility management entity or target mobility management entity to activate/establish/update the core network connection and local IP access connection; otherwise, only activate/establish/update the core network connection, and disconnect the local IP access connection.

Step S1007: the target RAN node responds a handover request acknowledge message to the target mobility management entity, which carries the established core network connection information and rejects to bear information including local IP access connection

Step S1008: the target mobility management entity sends a forward relocation response message to the source mobility management entity Step S 1009: continue the normal handover procedure.

Step S1010: if mobility is not supported, then the source mobility management entity initiates a deletion procedure for local IP access connection toward the source local gateway. This step can be performed after step S 1008.

### Embodiment 6

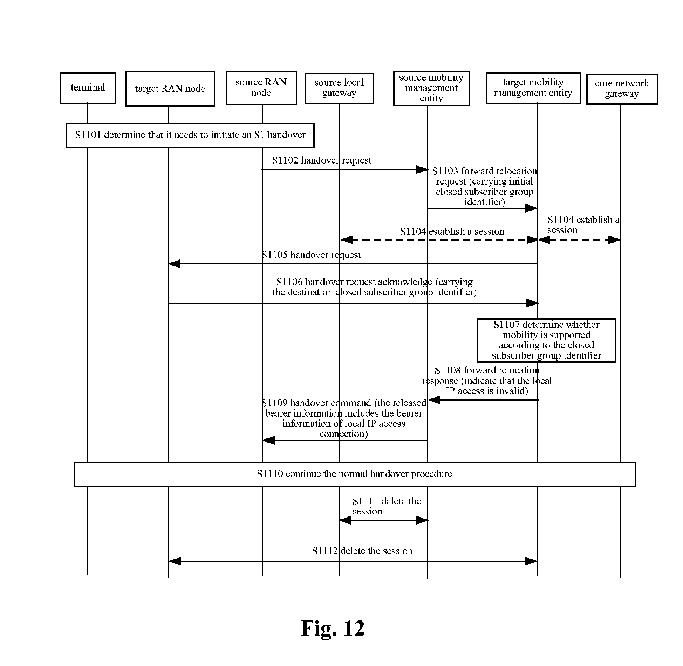

Fig. 12 is a flowchart of the handover process of a terminal based on the system shown in Fig. 1 of the present invention. In this embodiment, the target mobility management entity determines whether mobility is supported according to the CSG information. The specific steps are described as follows.

Step S1101: the RAN node determines that it needs to initiate an S 1 handover.

Step S 1102: the source RAN node sends a handover required to the source mobility management entity.

Step S 1103: the source mobility management entity sends a forward relocation request message to the target mobility management entity, which carries the initial CSG identifier of the user.

Step S 1104: the target mobility management entity can initiate a session establishment procedure of the core network and local IP access connection toward the core network gateway.

Step S 1105: the target mobility management entity requests the target RAN node to perform handover.

Step S 1106: the target RAN node responds a handover request acknowledge message to the target mobility management entity, which carries the target CSG information, i.e. the CSG identifier information of the user at the target RAN node.

Step S 1107: the target mobility management entity determines whether mobility is supported.

The method for determining whether mobility is supported is as follows: if the CSG identifier changes, then the target mobility management entity deems that mobility is not supported, or the target mobility management entity determines whether the initial CSG identifier and the target CSG identifier of the user belong to a CSG list which supports mobility (if yes, then it is deemed that mobility is supported); and if the CSG identifier does not change, then the target mobility management entity deems that mobility is supported or determines whether this CSG identifier supports mobility.

If mobility is supported, then activate/establish/update the core network connection and local IP access connection; otherwise, only activate/establish/update the core network connection and disconnect the local IP access connection.

Step S 1108: the target mobility management entity sends a forward relocation response message to the source mobility management entity

If mobility is not supported, then this message carries an instruction that the local IP access connection is invalid.

The method for instructing that the local IP access connection is invalid is as follows: carrying an instruction that the local IP access connection is invalid, carrying the acceptable bearer information which does not include the bearer of local IP access connection, and carrying the unacceptable bearer information which includes the bearer of local IP access connection.

Step S 1109: the source RAN node sends a handover command to the source RAN node.

If mobility is not supported, then the bearer information, which is carried in this handover command and needs to be released, includes the bearer information of the local IP access connection.

Step S1110: continue the normal handover procedure.

Step S 1111: if mobility is not supported, then the source mobility management entity initiates a deletion procedure for local IP access connection toward the source local gateway. This step can be performed after step S1108.

Step S1112:if mobility is not supported, then the target mobility management entity initiates a deletion procedure for local IP access connection bearer toward the target RAN node. This step can be performed after step S 1107.

### Embodiment 7

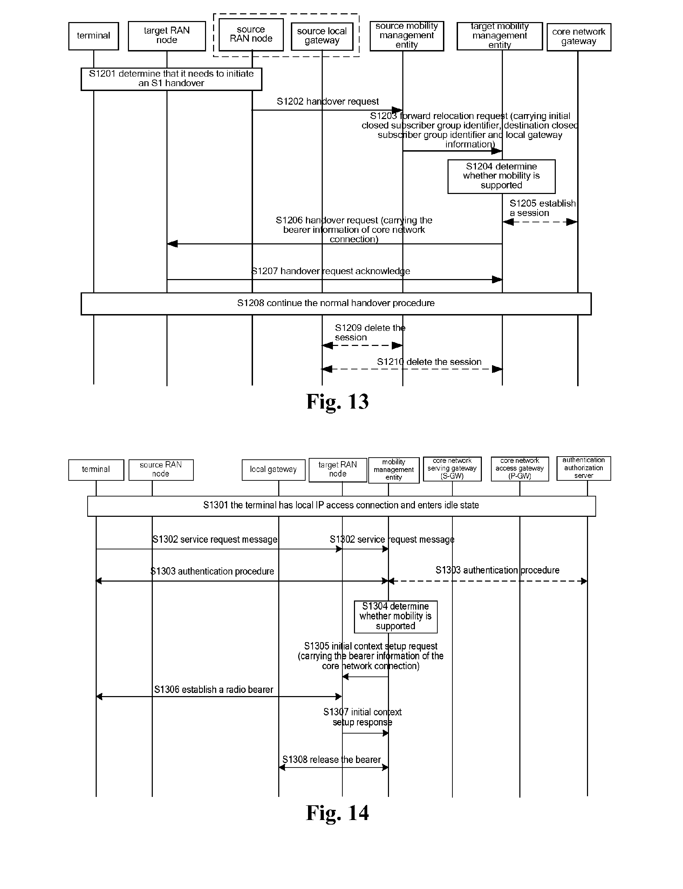

Fig. 13 is a flowchart of the handover process of a terminal based on the system shown in Fig. 1 of the present invention. In this embodiment, the target mobility management entity determines whether mobility is supported. The specific steps are described as follows:

Step S1201:the RAN node determines that it needs to initiate an S1 handover.

Step S1202:the source RAN node sends a handover required to the source mobility management entity, which request carries the target CSG identifier.

Step S1203:the source mobility management entity sends a forward relocation request message to the target mobility management entity, which can carry the target local gateway information, i.e. the local gateway information supported by the target RAN node, such as local gateway identifier and IP address. Alternatively, this forward relocation request message can carry the initial CSG identifier and/or target CSG identifier.

In addition, the way for the target or source mobility management entity to acquire the target local gateway information can also be as follows: the mobility management entity can also inquire to obtain the local gateway information via a DNS (domain name system) server or a management server according to the identifier of the RAN node and/or the established connection type and/or relevant subscription information of local IP access. For example, select a SGW or PGW corresponding to the identifier of the RAN node via the DNS server or management server, or select a SGW or PGW compatible with the established connection type and/or subscription information, or select a SGW or PGW corresponding to the identifier of the RAN node and compatible with the established connection type and/or subscription information.

Step S1204:the target mobility management entity determines whether mobility is supported.

The method for determining whether mobility is supported is as follows: check whether the local gateway information of the user local IP access connection is the same as the target local gateway information; and if same, then it is deemed that the local IP access connection supports mobility, and in this case it needs to activate/establish/update the core network connection and local IP access connection; if different, then the local IP access connection does not support mobility, and in this case it only needs to activate/establish/update the core network connection and disconnect the local IP access connection of the user.

Alternatively, the method for determining whether mobility is supported is as follows: if the CSG identifier changes, then the target mobility management entity deems that mobility is not supported, or the target mobility management entity determines whether the initial CSG identifier and the target CSG identifier of the user belong to a CSG list which supports mobility (if yes, then it is deemed that mobility is supported); and if the CSG identifier does not change, then the target mobility management entity deems that mobility is supported or determines whether this CSG identifier supports mobility. If mobility is supported, then activate/establish/update the core network connection and local IP access connection; otherwise, only activate/establish/update the core network connection and disconnect the local IP access connection.

Step S1205:if mobility is not supported, then the target mobility management entity initiates a session establishment and forwarding tunnel establishment procedure of the core network connection toward the core network gateway, and it is unnecessary to establish the local IP access connection information.

Step S1206:the target mobility management entity requests the target RAN node to perform handover, which request carries the bearer information of the core network connection and does not carry the local IP access connection information.

Step S1207:the target RAN node responds a handover request acknowledge message to the target mobility management entity.

Step S 1208: continue the normal handover procedure. In this case, the redirect forward complete message sent by the target mobility management entity to the source mobility management entity carries instruction information that the local IP access is invalid.

Step S1209:optionally, if the instruction information that the local IP access is invalid is acquired in step S 1208, then the source mobility management entity initiates a deletion procedure of the local IP access connection toward the source local access gateway

Step S 1210: alternatively and optionally, the target mobility management entity initiates a release procedure of local IP connection, and this step can be performed after step S 1204.

In this embodiment, when the terminal only has local IP access connection and no core network connection, if the target mobility management entity determines that mobility cannot be supported, then failure information can be carried in step S 1208, and the source mobility management entity initiates a release operation of local IP access connection.

### Embodiment 8

Fig. 14 shows a flowchart of the service request process of a terminal converting from idle state to connected state and the mobility determination process of the mobility management entity provided on the basis of the system architecture in Fig. 1 of the present invention. The specific steps are described as follows.

Step S1301:the terminal has local IP access connection and core network connection after accessing a radio communication system and then the terminal enters idle state.

Step S1302:the terminal sends a service request message to the mobility management entity via the RAN node, wherein the message sent by the RAN node to the mobility management entity can carry the current local gateway information (i.e. the local gateway information supported by the current RAN node, which is also target local gateway information) or the current CSG identifier (i.e. the CSG identifier of the current RAN node, which is also target CSG identifier).

In addition, the way for the mobility management entity to acquire the target local gateway information can also be as follows: the mobility management entity can also inquire to obtain the local gateway information via a DNS (domain name system) server or a management server according to the identifier of the RAN node and/or the established connection type and/or relevant subscription information of local IP access. For example, select a SGW or PGW corresponding to the identifier of the RAN node via the DNS server or management server, or select a SGW or PGW compatible with the established connection type and/or subscription information, or select a SGW or PGW corresponding to the identifier of the RAN node and compatible with the established connection type and/or subscription information.

Step S1303:perform the NAS (Non-Access-Stratum) authentication process, and this step is optional.

Step S1304:the mobility management entity determines whether mobility is supported.

The method for determining whether mobility is supported can be as follows: check whether the local gateway information of the local IP access connection for the user is the same as the target local gateway information; and if same, then it is deemed that the local IP access connection supports mobility, and in this case it needs to activate/establish/update the core network connection and local IP access connection; if different, then the local IP access connection does not support mobility, and in this case it only needs to activate/establish/update the core network connection and disconnect the local IP access connection of the user.

The method for determining whether mobility is supported can be as follows: if the CSG identifier changes, then the mobility management entity deems that mobility is not supported, or the mobility management entity determines whether the initial CSG identifier and the target CSG identifier of the user belong to a CSG list which supports mobility (if yes, then it is deemed that mobility is supported); and if the CSG identifier does not change, then the mobility management entity deems that mobility is supported or determines whether this CSG identifier supports mobility. If mobility is supported, then activate/establish/update the core network connection and local IP access connection; otherwise, only activate/establish/update the core network connection and disconnect the local IP access connection.

Step S1305:the mobility management entity sends an initial context setup request message to the RAN node.

If mobility is not supported, then this message carries the bearer information of the core network connection and does not carry the bearer information of the local IP access connection.

If mobility is supported, then this message carries the bearer information of the core network connection and local IP access connection.

Step S1306:the RAN node performs the radio bearer establishment process.

Step S1307:the RAN node responds an initial context setup response message to the mobility management entity.

Step S 1308:if mobility is not supported, then the mobility management entity and the local gateway perform a deactivation process on the bearer of the local IP access connection. If mobility is supported, then the mobility management entity and the local gateway perform a modification operation on the bearer of the local IP access connection.

### Embodiment 9

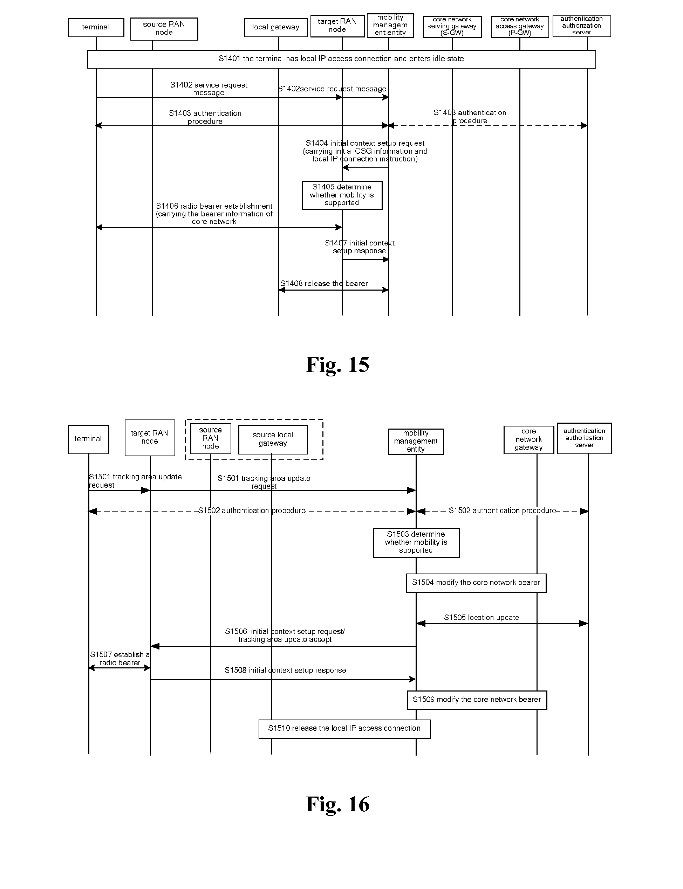

Fig. 15 shows a flowchart of the service request process of a terminal converting from idle state to connected state and the mobility determination process of the target RAN node provided on the basis of the system architecture in Fig. 1 of the present invention. The specific steps are described as follows:

Step S1401:the terminal has local IP access connection and core network connection after accessing a radio communication system and then the terminal enters idle state.

Step S1402:the terminal sends a service request message to the mobility management entity via the RAN node.

Step S1403:perform the NAS (Non-Access-Stratum) authentication process, and this step is optional.

Step S1404:the mobility management entity sends an initial context setup request message to the RAN node, which carries the initial CSG information and the local IP connection instruction.

Step S1405:the target RAN node determines whether mobility is supported.

The method for determining whether mobility is supported is as follows: if the CSG identifier changes, then the target RAN node deems that mobility is not supported, or the target RAN node determines whether the initial CSG identifier and the target CSG identifier of the user belong to a CSG list which supports mobility (if yes, then it is deemed that mobility is supported); and if the CSG identifier does not change, then the target RAN node deems that mobility is supported or determines whether this CSG identifier supports mobility. If mobility is supported, then activate/establish/update the core network connection and local IP access connection; otherwise, only activate/establish/update the core network connection and disconnect the local IP access connection.

Step S1406:the RAN node performs the radio bearer establishment process.

If mobility is not supported, then the message during this radio bearer establishment process carries the bearer information of the core network connection and does not carry the bearer information of the local IP access connection.

If mobility is supported, then the message during this radio bearer establishment process carries the bearer information of the core network connection and local IP access connection.

Step S1407:the mobility management entity responds an initial context setup response message to the RAN node.

Step S1408:if mobility is not supported, then the mobility management entity and the local gateway perform a disconnection process on the bearer of the local IP access connection. If mobility is supported, then the mobility management entity and the local gateway perform a modification operation on the bearer of the local IP access connection.

### Embodiment 10

Fig. 16 shows a flowchart of the location update process of a terminal and the mobility determination of the mobility management entity provided on the basis of the system architecture in Fig. 1 of the present invention. The specific steps are described as follows.

Step S1501:the terminal sends a tracking area update request message to the mobility management entity via the RAN node, which carries an active flag and can carry the target local gateway information.

In addition, the way for the target mobility management entity to acquire the target local gateway information can also be as follows: the mobility management entity can also inquire to obtain the local gateway information via a DNS server or a management server according to the identifier of the RAN node and/or the established connection type and/or relevant subscription information of local IP access. For example, select a SGW or PGW corresponding to the identifier of the RAN node via the DNS server or management server, or select a SGW or PGW compatible with the established connection type and/or subscription information, or select a SGW or PGW corresponding to the identifier of the RAN node and compatible with the established connection type and/or subscription information.

Step S 1502: optionally, the terminal, mobility management entity, and authentication authorization server perform the authentication process.

Step S1503:the mobility management entity determines whether mobility is supported.

The method for determining whether mobility is supported is as follows: check whether the local gateway information of the local IP access connection for the user is the same as the target local gateway information; and if same, then it is deemed that the local IP access connection supports mobility, and in this case it needs to activate/establish/update the core network connection and local IP access connection; if different, then the local IP access connection does not support mobility, and in this case it only needs to activate/establish/update the core network connection and disconnect the local IP access connection of the user.

Alternatively, the method for determining whether mobility is supported is as follows: if the CSG identifier changes, then the mobility management entity deems that mobility is not supported, or the mobility management entity determines whether the initial CSG identifier and the target CSG identifier of the user belong to a CSG list which supports mobility (if yes, then it is deemed that mobility is supported); and if the CSG identifier does not change, then the mobility management entity deems that mobility is supported or determines whether this CSG identifier supports mobility. If mobility is supported, then activate/establish/update the core network connection and local IP access connection; otherwise, only activate/establish/update the core network connection and disconnect the local IP access connection.

Step S1504:if mobility is not supported, then the mobility management entity updates the core network bearer for the core network gateway and does not update the local IP access connection.

Step S1505:the mobility management entity performs the location update procedure with the authentication authorization server

Step S1506:the mobility management entity sends an initial context setup request message to the target RAN node. If mobility is not supported, then this message does not carry the bearer information of the local IP access connection.

Step S1507:the RAN node performs the radio bearer establishment process.

Step S1508:the RAN node responds an initial context setup response/radio bearer establishment completed message to the mobility management entity.

Step S1509:the mobility management entity requests the core network S-GW to modify the bearer so as to activate/establish/update the core network connection of the terminal; and the core network S-GW sends a bearer modification response message to the mobility management entity. Optionally, the core network S-GW sends a bearer modification request message to the core network P-GW.

Step S1510:the mobility management entity initiates a disconnect procedure of the local IP connection.

In this case, step S 1510 can be performed after step S 1503.

### Embodiment 11

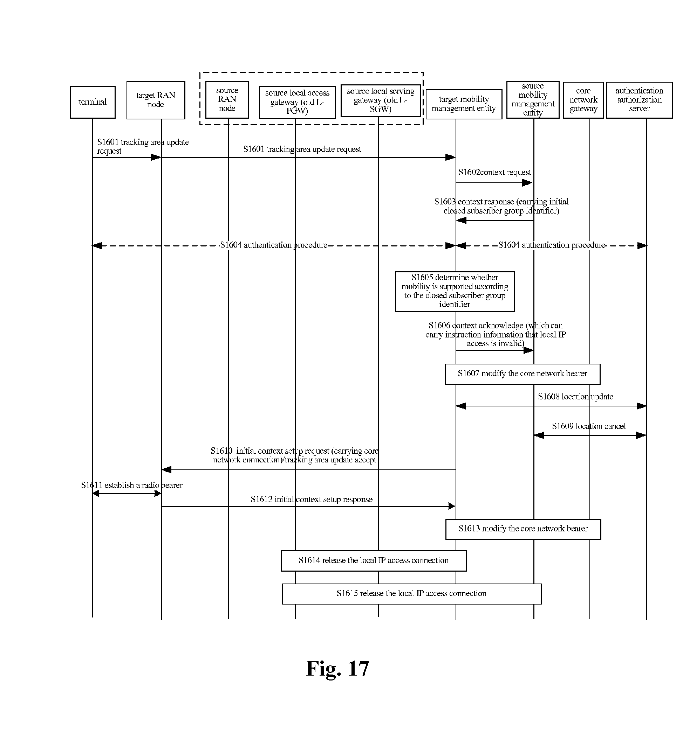

Fig. 17 shows a flowchart of the location update process of a terminal provided on the basis of the system architecture in Fig. 1 of the present invention. In this embodiment, the target mobility management entity determines whether mobility is supported. The specific steps are described as follows.

Step S1601:the terminal sends a tracking area update request message to the mobility management entity via the target RAN node, which carries an activation identifier.

Step S1602:the target mobility management entity sends a context request message to the source mobility management entity

Step S1603:the context response message sent by the source mobility management entity to the target mobility management entity carries the initial CSG identifier.

Step S 1604: optionally, the terminal, mobility management entity, and authentication authorization server perform the authentication process.

Step S1605:if the CSG identifier changes, then the target mobility management entity deems that mobility is not supported, or the target mobility management entity determines whether the initial CSG identifier and the target CSG identifier of the user belong to a CSG list which supports mobility (if yes, then it is deemed that mobility is supported); and if the CSG identifier does not change, then the target mobility management entity deems that mobility is supported or determines whether this CSG identifier supports mobility.

If mobility is supported, then activate/establish/update the core network connection and local IP access connection; otherwise, only activate/establish/update the core network connection.

Step S1606:if mobility is not supported, then the context acknowledge message sent by the target mobility management entity to the source mobility management entity can carry instruction information that the local IP access is invalid.

Step S1607:the target mobility management entity initiates a bearer modification operation toward the core network S-GW, and it is unnecessary to modify the local IP access connection information.

Step S1608:the target mobility management entity performs the location update procedure with the authentication authorization server

Step S1609:the authentication authorization server performs the location cancellation process with the source mobility management entity.

Step S1610:the initial context setup request message sent by the target mobility management entity to the target RAN node carries the core network connection information and does not carry the local IP access connection information.

Step S 1611: the target RAN node performs the radio bearer establishment process.

Step S1612:the target RAN node responds an initial context setup response/radio bearer establishment completed message to the mobility management entity.

Step S1613:the mobility management entity requests the core network S-GW to modify the bearer so as to activate/establish/update the core network connection of the terminal; and the core network S-GW sends a bearer modification response message to the mobility management entity. Optionally, the core network S-GW sends a bearer modification request message to the core network P-GW.

Step S1614:the target mobility management entity initiates a disconnect procedure of the local IP connection.

Step S 1615: alternatively and optionally, the source mobility management entity initiates a disconnect procedure of the local IP connection after acquiring the instruction information that the local IP access is invalid in step S1606.

In this case, step S1614 can be performed after step S1605.

In this embodiment, when the terminal only has local IP access connection and no core network connection, if the target mobility management entity determines that mobility cannot be supported, then failure information can be carried in step S 1606, and the source mobility management entity initiates a disconnect operation of local IP access connection.

### Embodiment 12

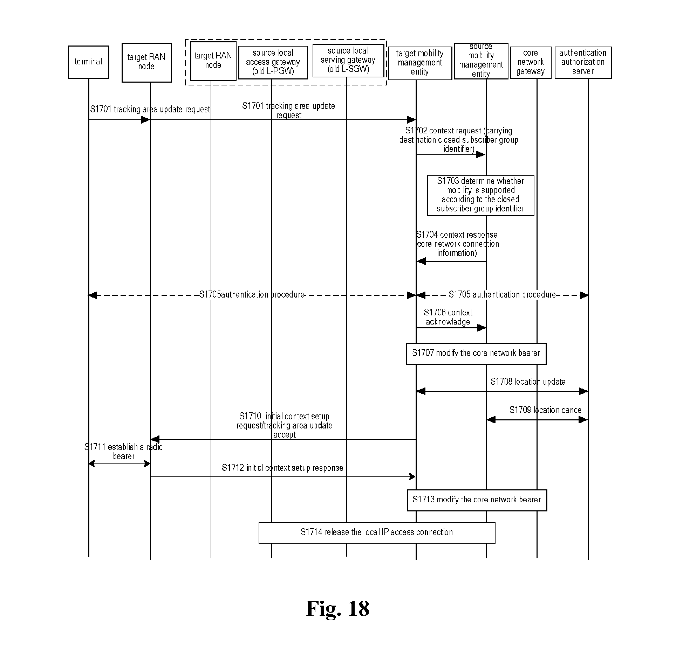

Fig. 18 shows a flowchart of the location update process of a terminal provided on the basis of the system architecture in Fig. 1 of the present invention. In this embodiment, the source mobility management entity determines whether mobility is supported. The specific steps are described as follows.

Step S1701:the terminal sends a tracking area update request message to the mobility management entity via the target RAN node, which carries activation identifier.

Step S1702:the target mobility management entity sends a context request message to the source mobility management entity which carries the target CSG identifier.

Step S1703:if the CSG identifier changes, then the source mobility management entity deems that mobility is not supported, or the source mobility management entity determines whether the initial CSG identifier and the target CSG identifier of the user belong to a CSG list which supports mobility (if yes, then it is deemed that mobility is supported); and if the CSG identifier does not change, then the source mobility management entity deems that mobility is supported or determines whether this CSG identifier supports mobility.

If mobility is supported, then activate/establish the core network connection and local IP access connection; otherwise, only activate/establish the core network connection.

Step S1704:if mobility is not supported, then the context response message sent by the source mobility management entity to the target mobility management entity carries information of the core network connection and does not carry information of the local IP access connection.

Step S 1705: optionally, the terminal, mobility management entity, and authentication authorization server perform the authentication process.

Step S1706:the target mobility management entity sends a context acknowledge message to the source mobility management entity.

Step S1707:the target mobility management entity initiates a bearer modification operation toward the core network S-GW.

Step S1708:the target mobility management entity performs the location update procedure with the authentication authorization server

Step S1709:the authentication authorization server performs the location cancellation procedure with the source mobility management entity

Step S1710:the target mobility management entity sends an initial context setup request message to the target RAN node.

Step S 1711: the target RAN node performs the radio bearer establishment process.

Step S1712:the target RAN node responds an initial context setup response/radio bearer establishment completed message to the mobility management entity.

Step S1713:the mobility management entity request the core network S-GW to modify the bearer so as to activate/establish the core network connection of the terminal; and the core network S-GW sends a bearer modification response message to the mobility management entity. Optionally, the core network S-GW sends a bearer modification request message to the core network P-GW.

Step S1714:the source mobility management entity initiates a disconnect procedure of the local IP connection.

In this case, step S 1714 can be performed after step S 1703.

### Embodiment 13

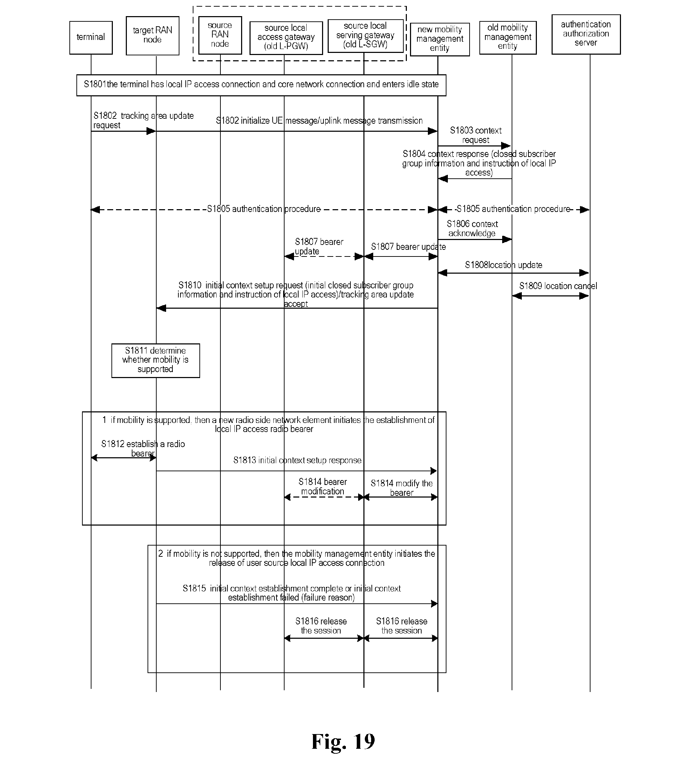

Fig. 19 shows a flowchart of the tracking area update process and the mobility determination of the target RAN node provided on the basis of the system architecture in Fig. 1 of the present invention. The specific steps of this embodiment are described as follows.

Step S801:the terminal has local IP access connection after accessing a radio communication system and then the terminal enters idle state.

Step S1802:the terminal in idle state initiates a tracking area update procedure regularly or due to the reason that the mobility causes the tracking area list to change. The terminal sends an NAS (Non-Access-Stratum) message-tracking area update request to the RAN node (collectively referred to as target RAN node) which currently serves the terminal. After the terminal moves, this RAN node may be different from the RAN node (collectively referred to as source RAN node) before the terminal enters idle state.

The RAN node selects a currently serving mobility management entity (collectively referred to as new mobility management entity) for the user and includes the tracking area update request in an initial user message/context message transmission message and sends the same to the new mobility management entity.

Step S1803:when the new mobility management entity is different from the source mobility management entity, the new mobility management entity initiates a context acquisition procedure toward the source mobility management entity.

Step S1804:the source mobility management entity includes the context information of the user in a context response message and sends the same to the new mobility management entity. If the user has local IP access connection, the message has to carry the initial CSG identifier information of the local IP access connection and the instruction information of the local IP access connection.

Step S1805:the new mobility management entity may initiate an authentication authorization procedure toward the user

Step S1806:the new mobility management entity stores the message carried in step S 1804 and responds a context acknowledge message to the source mobility management entity.

Step S1807:the new mobility management entity selects a source L-SGW for the local IP access connection and initiates a bearer update procedure toward the source L-SGW. The source L-SGW may initiate the bearer update procedure toward the source L-PGW.

When the user has core network connection, the new mobility management entity further needs to initiate a session establishment or bearer update procedure of the core network connection.

Step S1808:the new mobility management entity initiates the location update procedure toward the authentication authorization server

Step S1809:the authentication authorization server initiates the location deletion procedure toward the source mobility management entity. The source mobility management entity may initiate a session deletion procedure of the core network connection.

Step S1810:the target mobility management entity sends an initial context setup request message to the target RAN node and at the same time sends a rouging area update accept message. The message has to carry the CSG identifier information of the local IP access connection and the instruction information of the local IP access connection.

When the user updates the routing area, the RAN node does not change, i.e. the target RAN node is the same as the source RAN node, and it is possible that the message sent by the mobility management entity does not carry the above information.

Step S 1811: the target RAN node determines whether mobility is supported.

The method for determining whether mobility is supported is as follows: if the CSG identifier changes, then the target RAN node deems that mobility is not supported, or the target RAN node determines whether the initial CSG identifier and the target CSG identifier of the user belong to a CSG list which supports mobility (if yes, then it is deemed that mobility is supported); and if the CSG identifier does not change, then the target RAN node deems that mobility is supported or determines whether this CSG identifier supports mobility. If mobility is supported, then activate/establish/update the core network connection and local IP access connection; otherwise, only activate/establish/update the core network connection and disconnect the local IP access connection.

### 1) If mobility is supported, then establish the local IP access connection;

Step S1812:the RAN node performs the radio bearer establishment process, and the message carries the bearer information of the core network connection and local IP access connection.

Step S1813:the RAN node responds a context establishment completed message to the target mobility management entity.

Step S1814:the target mobility management entity initiates a bearer modification operation toward the local gateway.

### 2) If mobility is not supported, then initiate the disconnect of the local IP access connection.

Step S1815:the RAN node responds an initial context setup response message or initial context establishment failure to the target mobility management entity, which carries that the cause of the failure is that mobility is not supported.

Step S1816:the target mobility management entity initiates a session disconnect operation of local IP access connection toward the local gateway.

When the local IP access connection does not have mobility, the disconnect of local IP access connection is taken as an example in this embodiment, and in this case the local IP access connection can also be converted to core network connection, and this procedure is similar to the conventional art, which will not be described here in detail.

### Embodiment 14

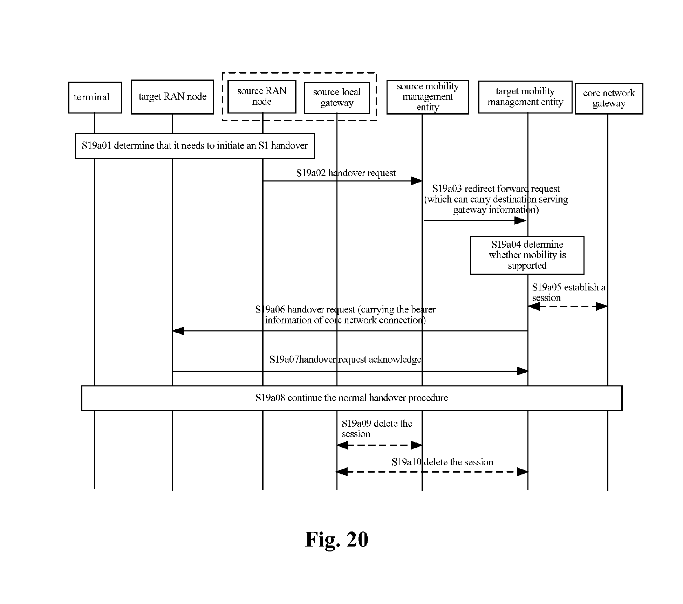

Fig. 20 is a flowchart of the handover process of a terminal based on the system shown in Fig. 1 of the present invention. In this embodiment, the target mobility management entity determines whether mobility is supported according to the network element connection information. The specific steps are described as follows:

Step S 19a01: the RAN node determines that it needs to initiate an S 1 handover.

Step S19a02: the source RAN node sends a handover request to the source mobility management entity, which request can carry the target serving gateway information.

Step S19a03: the source mobility management entity sends a forward relocation request message to the target mobility management entity, which can carry the target serving gateway information, i.e. the serving gateway information supported by the target RAN node.

In addition to the above way of acquiring the target serving gateway information, in step S19a04 the target mobility management entity can further acquire the target serving gateway information of the local IP access connection via the target RAN node identifier, target CSG ID, location identifier, and TAI (Tracking Area ID).

The target serving gateway can be different from or the same as the source serving gateway.

Step S19a04: the target mobility management entity determines whether mobility is supported.

The method for determining whether mobility is supported is as follows: determining whether there is a connection or interface between the target serving gateway and the source local access gateway, or determining whether there is a connection or interface between a target RAN node or a target home (e)nodeB gateway and a source local gateway; and if yes, then it is deemed that the local IP access connection supports mobility, and in this case it needs to activate or establish or update the core network connection and local IP access connection; and if it does not exist, then the local IP access connection does not support mobility, and in this case it only needs to activate or establish or update the core network connection and disconnect the local IP access connection.

Whether there is a connection or interface between the target serving gateway and the source local access gateway, or determining whether there is a connection or interface between the target RAN node or the target home (e)nodeB gateway and the source local gateway, can be configured in the mobility management entity and can also be notified to the mobility management entity by other network elements (such as network management HMS and RAN node).

The subsequent procedure takes that mobility is not supported as an example.

Step S19a05: the target mobility management entity initiates a session establishment and forwarding tunnel establishment procedure of the core network connection toward the core network gateway, and it is unnecessary to establish the local IP access connection information.

Step S19a06: the target mobility management entity requests the target RAN node to perform handover, which request carries the bearer information of the core network connection and does not carry the local IP access connection information.

Step S19a07: the target RAN node responds a handover request acknowledge message to the target mobility management entity.

Step S19a08: continue the normal handover procedure. In this case, the redirect forward complete message sent by the target mobility management entity to the source mobility management entity carries instruction information that the local IP access is invalid or local IP access bearer that the establishment is failed.

Step 19a09: optionally, if the instruction information that the local IP access is invalid or local IP access bearer that the establishment is failed is acquired in step S19a08, then the source mobility management entity initiates a deletion procedure of the local IP access connection toward the source local access gateway.

Step S19a10: alternatively and optionally, the target mobility management entity initiates a disconnect procedure of the local IP connection, and this step can be performed after step S 19a04.

In this embodiment, when the terminal only has local IP access connection and no core network connection, if the target mobility management entity determines that mobility cannot be supported, then failure information can be carried in step S19a08, and the source mobility management entity initiates a disconnect operation of local IP access connection.

### Embodiment 15

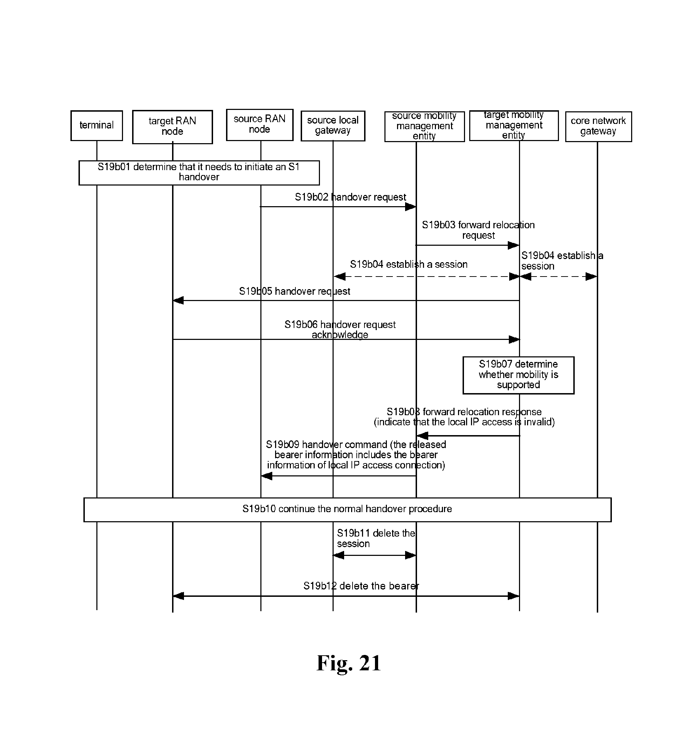

Fig. 21 is a flowchart of the handover process of a terminal based on the system shown in Fig. 1 of the present invention. In this embodiment, the target mobility management entity determines whether mobility is supported according to the network element connection information after a handover request acknowledge message. The specific steps are described as follows:

Step S19b01: the RAN node determines that it needs to initiate an S1 handover.

Step S19b02: the source RAN node sends a handover request to the source mobility management entity.

Step S19b03: the source mobility management entity sends a forward relocation request message to the target mobility management entity, which can carry the target serving gateway information.

In addition to the above way of acquiring the target serving gateway information, in step S19b07 the target mobility management entity can further acquire the target serving gateway information of the local IP access connection via the target RAN node identifier, target CSG ID, location identifier, and TAI (Tracking Area ID).

The target serving gateway can be different from or the same as the source serving gateway.

Step S19b04: the target mobility management entity can initiate a session establishment procedure of the core network and local IP access connection toward the core network gateway.

Step S19b05: the target mobility management entity requests the target RAN node to perform handover.

Step S 19b06: the target RAN node responds to the target mobility management entity a handover request acknowledge message, which can carry the target serving gateway information, i.e. the serving gateway information supported by the target RAN node.

In addition to the above way of acquiring the target serving gateway information, in step S 19b07 the target mobility management entity can further acquiring the target serving gateway information of the local IP access connection via the target RAN node identifier, target CSG ID, location identifier, and TAI (Tracking Area ID).

The target serving gateway can be different from or the same as the source serving gateway.

Step S19b07: the target mobility management entity determines whether mobility is supported.

The method for determining whether mobility is supported is as follows: determining whether there is a connection/interface between the target serving gateway and the source local access gateway, or determining whether is a connection/interface between a target RAN node/a target home (e)nodeB gateway and a source local gateway; and if yes, then it is deemed that the local IP access connection supports mobility, and in this case it needs to activate/establish/update the core network connection and local IP access connection; and if it does not exist, then the local IP access connection does not support mobility, and in this case it only needs to activate/establish/update the core network connection and disconnect the local IP access connection.

Whether there is a connection/interface between the target serving gateway and the source local access gateway, or whether there is a connection/interface between the target RAN node/the target home (e)nodeB gateway and the source local gateway can be configured in the mobility management entity, and can also be notified to the mobility management entity by other network elements (such as network management HMS and RAN node).

The subsequent procedure takes that mobility is not supported as an example.

Step S19b08: the target mobility management entity sends a forward relocation response message to the source mobility management entity

If mobility is not supported, then this message carries an instruction that the local IP access connection is invalid.

The method for instructing that the local IP access connection is invalid is as follows: carrying an instruction that the local IP access connection is invalid, carrying the acceptable bearer information which does not include the bearer of local IP access connection, and carrying the unacceptable bearer information which includes the bearer of local IP access connection.

Step S19b09: the source mobility management entity sends a handover command to the source RAN node.

If mobility is not supported, then the bearer information, which is carried in this handover command and needs to be released, includes the bearer information of the local IP access connection.

Step S19b10: continue the normal handover procedure.

Step S19b11: if mobility is not supported, then the source mobility management entity initiates a deletion procedure for the local IP access connection toward the source local gateway. This step can be performed after step S19b08.

Step S19b12: if mobility is not supported, then the target mobility management entity initiates a deletion procedure for local IP access connection bearer toward the target RAN node. This step can be performed after step S 19b07.

### Embodiment 16

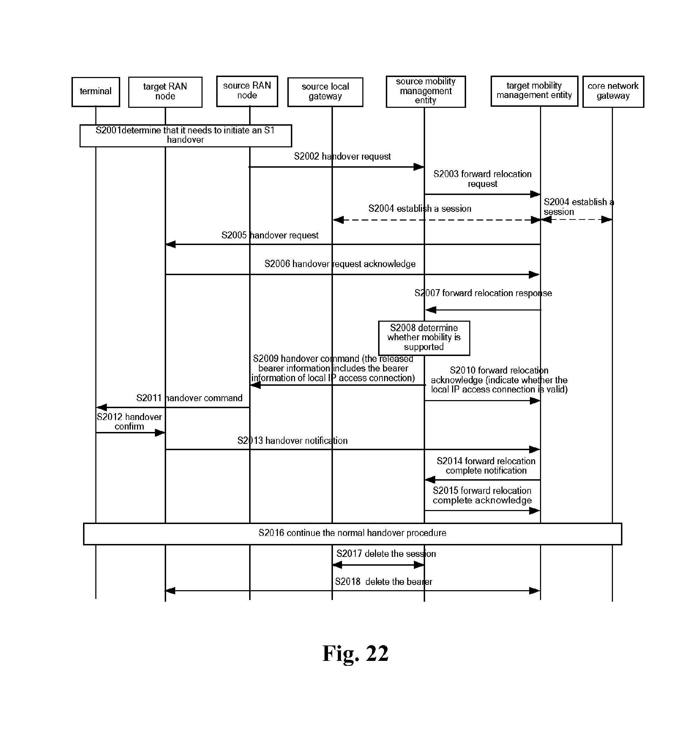

Fig. 22 is a flowchart of the handover process of a terminal based on the system shown in Fig. 1 of the present invention. In this embodiment, the source mobility management entity determines whether mobility is supported according to the network element connection information and newly adds a forward relocation acknowledge message. The specific steps are described as follows.

Step S2001:the RAN node determines that it needs to initiate an S1 handover.

Step S2002:the source RAN node sends a handover request to the source mobility management entity.

Step S2003:the source mobility management entity sends a forward relocation request message to the target mobility management entity.

Step S2004:the target mobility management entity can initiate a session establishment procedure of the core network and local IP access connection toward the core network gateway.

Step S2005:the target mobility management entity requests the target RAN node to perform handover.

Step S2006:the target RAN node responds to the target mobility management entity a handover request acknowledge message, which can carry the target serving gateway information, i.e. the serving gateway information supported by the target RAN node.

In addition to the above way of acquiring the target serving gateway information, in step S2007 or S2008 the target mobility management entity or source mobility management entity can further acquire the target serving gateway information of the local IP access connection via the target RAN node identifier, target CSG ID, location identifier, and TAI (Tracking Area ID). If the target serving gateway information is acquired in step S2007, then it needs to transfer the target serving gateway information to the source mobility management entity in this step.

The target serving gateway can be different from or the same as the source serving gateway.

Step S2007:the target mobility management entity sends a forward relocation response message to the source mobility management entity, which can carry the target serving gateway.

Step S2008:the source mobility management entity determines whether mobility is supported.

The method for determining whether mobility is supported is as follows: determining whether there is a connection or interface between the target serving gateway and the source local access gateway, or determining whether there is a connection or interface between a target RAN node or a target home (e)nodeB gateway and a source local gateway; and if yes, then it is deemed that the local IP access connection supports mobility, and in this case it needs to activate or establish or update the core network connection and local IP access connection; and if it does not exist, then the local IP access connection does not support mobility, and in this case it only needs to activate or establish or update the core network connection and disconnect the local IP access connection.

Whether there is a connection or interface between the target serving gateway and the source local access gateway, or whether there is a connection or interface between the target RAN node or the target home (e)nodeB gateway and the source local gateway, can be configured in the mobility management entity and can also be notified to the mobility management entity by other network elements (such as network management HMS and RAN node).

The subsequent procedure takes that mobility is not supported as an example.

Step S2009:the source mobility management entity sends a handover command to the source RAN node.

The bearer information, which is carried in this handover command and needs to be released, includes the bearer information of the local IP access connection.

Step S2010:the source mobility management entity sends a forward relocation acknowledge to the target mobility management entity to indicate indicate whether the local IP access connection is valid. This step S2011 can be performed after step S2009.

The method for instructing that the local IP access connection is valid is as follows: carrying an instruction that the local IP access connection is valid or not carrying an instruction that the local IP access connection is invalid, carrying the acceptable bearer information which includes the bearer of local IP access connection, and carrying the unacceptable bearer information which does not include the bearer of local IP access connection.

The method for instructing that the local IP access connection is invalid is as follows: carrying an instruction that the local IP access connection is invalid or not carrying an instruction that the local IP access connection is valid, carrying the acceptable bearer information which does not include the bearer of local IP access connection, and carrying the unacceptable bearer information which includes the bearer of local IP access connection.

Step S2011:the source RAN node sends a handover command to the terminal.

Step S2012: the terminal initiates a handover confirmhandover confirm message to the target RAN node.

Step S2013: the target RAN node notifies the target mobility management entity to carry out handover.

Step S2014: the target RAN node sends a Forward Relocation Complete Notification message to the source mobility management entity.

Step S2015:the source RAN node sends a Forward Relocation Complete acknowledge message to the target mobility management entity.

Step S2016: continue the normal handover procedure.

Step S2017: if mobility is not supported, then the source mobility management entity initiates a deletion procedure for local IP access connection toward the source local gateway. This step can be performed after step S2008.

Step S2018: if mobility is not supported, then the target mobility management entity initiates a deletion procedure for local IP access connection bearer toward the target RAN node. This step can be performed after step S2010.

The embodiment in Fig. 22 is the situation of a newly adding forward relocation acknowledge message. Of course, the Forward Relocation Complete acknowledge message can be modified to indicate whether the local IP access connection is valid. In this case it is unnecessary to newly add the forward relocation acknowledge message, and in addition, the other procedures of the handover process of the terminal are similar to Fig. 22, which will not be described here redundantly.

### Embodiment 17

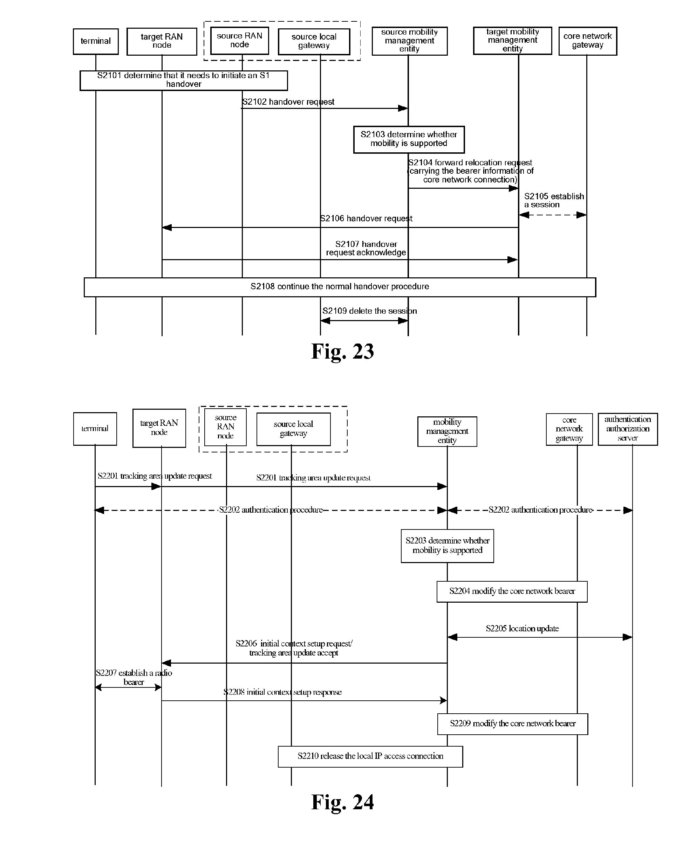

Fig. 23 is a flowchart of the handover process of a terminal based on the system shown in Fig. 1 of the present invention. In this embodiment, the source mobility management entity determines whether mobility is supported according to the network element connection information. The specific steps are described as follows.

Step S2101: the RAN node determines that it needs to initiate an S1 handover.

Step S2102: the source RAN node sends to the source mobility management entity a handover request acknowledge message, which can carry the target serving gateway information, i.e. the serving gateway information supported by the target RAN node.

In addition to the above way of acquiring the target serving gateway information, in step S2103 the target mobility management entity can further acquire the target serving gateway information of the local IP access connection via the target RAN node identifier, target CSG ID, location identifier, and TAI (Tracking Area ID).

The target serving gateway can be different from or the same as the source serving gateway.

Step S2103: the source mobility management entity determines whether mobility is supported.

The method for determining whether mobility is supported is as follows: determining whether there is a connection or interface between the target serving gateway and the source local access gateway, or determining whether is a connection or interface between a target RAN node or a target home (e)nodeB gateway and a source local gateway; and if yes, then it is deemed that the local IP access connection supports mobility, and in this case it needs to activate or establish or update the core network connection and local IP access connection; and if it does not exist, then the local IP access connection does not support mobility, and in this case it only needs to activate or establish or update the core network connection and disconnect the local IP access connection.

Whether there is a connection or interface between the target serving gateway and the source local access gateway, or whether there is a connection or interface between the target RAN node or the target home (e)nodeB gateway and the source local gateway, can be configured in the mobility management entity and can also be notified to the mobility management entity by other network elements (such as network management HMS and RAN node).

The subsequent procedure takes that mobility is not supported as an example.

Step S2104: the source mobility management entity sends a forward relocation request message to the target mobility management entity.

This message does not carry the bearer information of the local IP access connection.

Step S2105:the target mobility management entity can initiate a session establishment procedure of the core network toward the core network gateway.

Step S2106:the target mobility management entity requests the target RAN node to perform handover.

Step S2107: the target RAN node responds a handover request acknowledge message to the target mobility management entity.

Step S2108: continue the normal handover procedure.

Step S2109:if mobility is not supported, then the source mobility management entity initiates a deletion procedure for local IP access connection toward the source local gateway. This step can be performed after step S2103.

### Embodiment 18

Fig. 24 shows a flowchart of the location update process of a terminal and the mobility determination of the mobility management entity provided on the basis of the system architecture in Fig. 1 of the present invention. The specific steps are described as follows.

Step S2201:the terminal sends a tracking area update request message to the mobility management entity via the RAN node, which carries activation identifier. In this case, the message sent by the RAN node to the mobility management entity can carry the target serving gateway information, i.e. the serving gateway information supported by the target RAN node.

In addition to the above way of acquiring the target serving gateway information, in step S2203 the mobility management entity can further acquire the target serving gateway information of the local IP access connection via the target RAN node identifier, target CSG ID, location identifier, and TAI (Tracking Area ID).

The target serving gateway can be different from or the same as the source serving gateway.

Step S2202:optionally, the terminal, mobility management entity, and authentication authorization server perform the authentication process.

Step S2203:the mobility management entity determines whether mobility is supported.

The method for determining whether mobility is supported is as follows: determining whether there is a connection or interface between the target serving gateway and the source local access gateway, or determining whether is a connection or interface between a target RAN node or a target home (e)nodeB gateway and a source local gateway, if yes, then it is deemed that the local IP access connection supports mobility, and in this case it needs to activate or establish or update the core network connection and local IP access connection; and if it does not exist, then the local IP access connection does not support mobility, and in this case it only needs to activate or establish or update the core network connection and disconnect the local IP access connection.

Whether there is a connection or interface between the target serving gateway and the source local access gateway, or whether there is a connection or interface between the target RAN node or the target home (e)nodeB gateway and the source local gateway, can be configured in the mobility management entity and can also be notified to the mobility management entity by other network elements (such as network management HMS and RAN node).

The subsequent procedure takes that mobility is not supported as an example.

Step S2204:if mobility is not supported, then the mobility management entity updates the core network bearer for the core network gateway and does not update the local IP access connection.

Step S2205:the mobility management entity performs the location update procedure with the authentication authorization server

Step S2206:the mobility management entity sends an initial context setup request message to the target RAN node. If mobility is not supported, then this message does not carry the bearer information of the local IP access connection.

Step S2207:the RAN node performs the radio bearer establishment process.

Step S2208:the RAN node responds an initial context setup response/radio bearer establishment completed message to the mobility management entity.

Step S2209:the mobility management entity request the core network S-GW to modify the bearer so as to activate/establish/update the core network connection of the terminal; and the core network S-GW sends a bearer modification response message to the mobility management entity. Optionally, the core network S-GW sends a bearer modification request message to the core network P-GW.

Step S2210:the mobility management entity initiates a disconnect procedure of the local IP connection.

In this case, step S2210 can be performed after step S2203.

### Embodiment 19

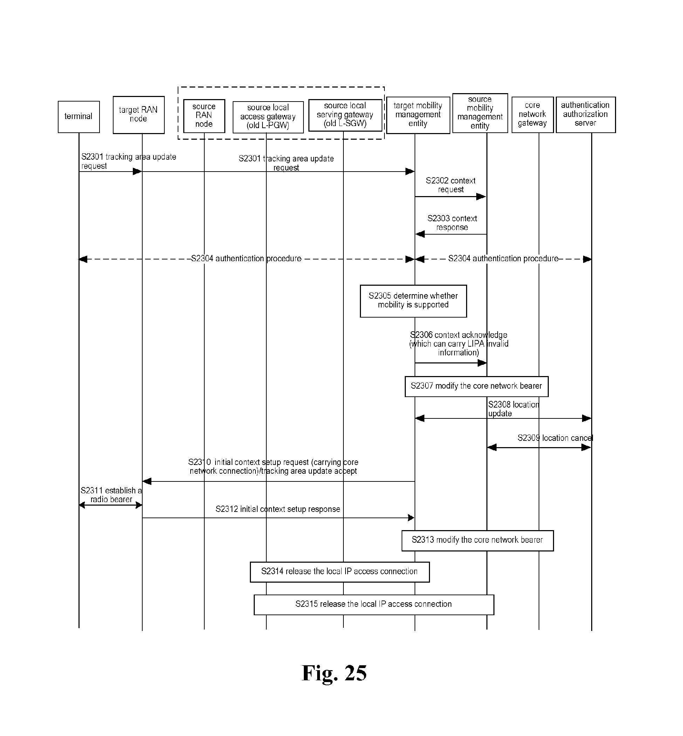

Fig. 25 shows a flowchart of the location update process of a terminal provided on the basis of the system architecture in Fig. 1 of the present invention. In this embodiment, the target mobility management entity determines whether mobility is supported. The specific steps are described as follows.

Step S2301:the terminal sends a tracking area update request message to the mobility management entity via the target RAN node, which carries activation identifier. In this case, the message sent by the RAN node to the mobility management entity can carry the target serving gateway information, i.e. the serving gateway information supported by the target RAN node.

In addition to the above way of acquiring the target serving gateway information, in step S2305 the target mobility management entity can further acquire the target serving gateway information of the local IP access connection via the target RAN node identifier, target CSG ID, location identifier, and TAI (Tracking Area ID).

The target serving gateway can be different from or the same as the source serving gateway.

Step S2302:the target mobility management entity sends a context request message to the source mobility management entity

Step S2303:the context response message sent by the source mobility management entity to the target mobility management entity can carry the target serving gateway information, i.e. the serving gateway information supported by the target RAN node.

In addition to the above way of acquiring the target serving gateway information, in step S2305 the target mobility management entity can further acquire the target serving gateway information of the local IP access connection via the target RAN node identifier, target CSG ID, location identifier, and TAI (Tracking Area ID).

The target serving gateway can be different from or the same as the source serving gateway.

Step S2304:optionally, the terminal, mobility management entity, and authentication authorization server perform the authentication process.

Step S2305:the target mobility management entity determines whether mobility is supported.

The method for determining whether mobility is supported is as follows: determining whether there is a connection or interface between the target serving gateway and the source local access gateway, or determining whether is a connection or interface between a target RAN node or a target home (e)nodeB gateway and a source local gateway; and if yes, then it is deemed that the local IP access connection supports mobility, and in this case it needs to activate or establish or update the core network connection and local IP access connection; and if it does not exist, then the local IP access connection does not support mobility, and in this case it only needs to activate or establish or update the core network connection and disconnect the local IP access connection.

Whether there is a connection or interface between the target serving gateway and the source local access gateway, or whether there is a connection or interface between the target RAN node or the target home (e)nodeB gateway and the source local gateway, can be configured in the mobility management entity and can also be notified to the mobility management entity by other network elements (such as network management HMS and RAN node).

The subsequent procedure takes that mobility is not supported as an example.

Step S2306:if mobility is not supported, then the context acknowledge message sent by the target mobility management entity to the source mobility management entity can carry instruction information that the local IP access is invalid.

Step S2307:the target mobility management entity initiates a bearer modification operation toward the core network S-GW, and it is unnecessary to modify the local IP access connection information.

Step S2308:the target mobility management entity performs the location update procedure with the authentication authorization server.

Step S2309:the authentication authorization server performs the location cancellation procedure with the source mobility management entity

Step S2310:the initial context setup request message sent by the target mobility management entity to the target RAN node carries the core network connection information and does not carry the local IP access connection information.

Step S2311: the target RAN node performs the radio bearer establishment process.

Step S2312: the target RAN node responds an initial context setup response/radio bearer establishment completed message to the mobility management entity.

Step S2313: the mobility management entity requests the core network S-GW to modify the bearer so as to activate/establish the core network connection of the terminal; and the core network S-GW sends a bearer modification response message to the mobility management entity. Optionally, the core network S-GW sends a bearer modification request message to the core network P-GW.

Step S2314: optionally, the target mobility management entity initiates a disconnect procedure of the local IP connection.

Step S2315: alternatively and optionally, the source mobility management entity initiates a disconnect procedure of the local IP connection after acquiring the instruction information that the local IP access is invalid in step S2306.

In this case, step S2314 can be performed after step S2305.

In this embodiment, when the terminal only has local IP access connection and no core network connection, if the target mobility management entity determines that mobility cannot be supported, then failure information can be carried in step S2306, and the source mobility management entity initiates a disconnect operation of local IP access connection.

### Embodiment 20

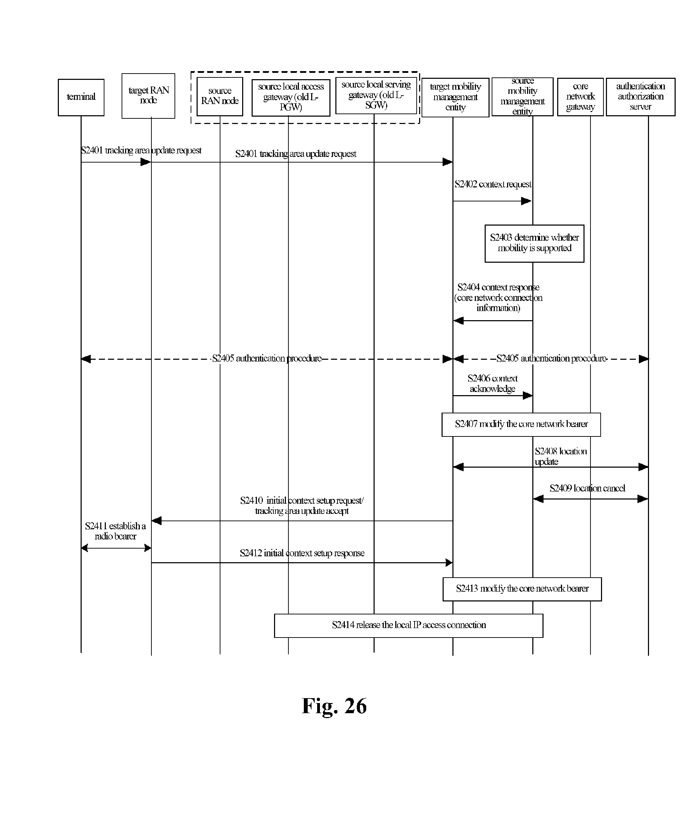

Fig. 26 shows a flowchart of the location update process of the provided terminal on the basis of the system architecture in Fig. 1 of the present invention. In this embodiment, the source mobility management entity determines whether mobility is supported. The specific steps are described as follows.

Step S2401:the terminal sends a tracking area update request message to the mobility management entity via the target RAN node, which carries activation identifier.

Step S2402:the target mobility management entity sends a context request message to the source mobility management entity, which can carry the target serving gateway information, i.e. the serving gateway information supported by the target RAN node.

In addition to the above way of acquiring the target serving gateway information, in step S2403 the source mobility management entity can further acquire the target serving gateway information of the local IP access connection via the target RAN node identifier, target CSG ID, location identifier, and TAI (Tracking Area ID).

The target serving gateway can be different from or the same as the source serving gateway.

Step S2403: the mobility management entity determines whether mobility is supported.

The method for determining whether mobility is supported is as follows: determining whether there is a connection or interface between the target serving gateway and the source local access gateway, or determining whether is a connection or interface between a target RAN node or a target home (e)nodeB gateway and a source local gateway, if yes, then it is deemed that the local IP access connection supports mobility, and in this case it needs to activate or establish or update the core network connection and local IP access connection; and if it does not exist, then the local IP access connection does not support mobility, and in this case it only needs to activate or establish or update the core network connection and disconnect the local IP access connection.

Whether there is a connection or interface between the target serving gateway and the source local access gateway, or whether there is a connection or interface between the target RAN node or the target home (e)nodeB gateway and the source local gateway, can be configured in the mobility management entity and can also be notified to the mobility management entity by other network elements (such as network management HMS and RAN node).

The subsequent procedure takes that mobility is not supported as an example.

Step S2404:if mobility is not supported, then the context response message sent by the source mobility management entity to the target mobility management entity carries the core network connection information and does not carry the local IP access connection information.

Step S2405: optionally, the terminal, mobility management entity, and authentication authorization server perform the authentication process.

Step S2406:the target mobility management entity sends a context acknowledge message to the source mobility management entity.

Step S2407:the target mobility management entity initiates a bearer modification operation toward the core network S-GW.

Step S2408:the target mobility management entity performs the location update procedure with the authentication authorization server

Step S2409:the authentication authorization server performs the location cancellation procedure with the source mobility management entity

Step S2410:the target mobility management entity sends an initial context setup request message to the target RAN node.

Step S2411: the target RAN node performs the radio bearer establishment process.

Step S2412:the target RAN node responds an initial context setup response/radio bearer establishment completed message to the mobility management entity.

Step S2413:the mobility management entity requests the core network S-GW to modify the bearer so as to activate/establish the core network connection of the terminal; and the core network S-GW sends a bearer modification response message to the mobility management entity. Optionally, the core network S-GW sends a bearer modification request message to the core network P-GW.

Step S2414:the source mobility management entity initiates a disconnect procedure of the local IP connection.

In this case, step S2414 can be performed after step S2403.

The embodiments in Figs. 20, 21, 22 and 23 are situations of determination of mobility management entity. For the situation where the source RAN node or target RAN node performs the determination, the source RAN node or target RAN node needs to learn the target serving gateway information (S-GW/L-SGW) and that the determination contents need to be modified as: determining whether there is a connection/interface between the target serving gateway and the source local gateway or whether there is a connection/interface between the target RAN node/the target home (e)nodeB gateway and the source local gateway. The other procedures are similar to Figs. 10 and 11, which will not be described here redundantly

For the service request process, the mobility management entity needs to learn the target serving gateway information (S-GW/L-SGW) and that the determination contents need to be modified as: determining whether there is a connection/interface between the target serving gateway and the source local access gateway or whether there is a connection/interface between the target RAN node/the target home (e)nodeB gateway and the source local gateway. The other procedures are similar to Figs. 14 and 15, which will not be described here redundantly.

For the tracking area update process, the target RAN node needs to learn the target serving gateway information (S-GW/L-SGW) and that the determination contents need to be modified as: determining whether there is a connection/interface between the target serving gateway and the source local access gateway or whether there is a connection/interface between the target RAN node/the target home (e)nodeB gateway and the source local gateway. The other procedures are similar to Fig. 19, which will not be described here redundantly.

If the local IP access and the core network connection use the same serving gateway, then this serving gateway is a local serving gateway as well as a core network serving gateway.

The serving gateway includes local serving gateway or/and core network serving gateway, and the access gateway includes local access gateway or/and core network access gateway. The local serving gateway can be L-SGW or L-SGSN or L-GW. The local access gateway can be L-SGW or L-GGSN or L-GW. The core network access gateway can be S-GW, P-GW, SGSN, and GGSN. The core network serving gateway can be S-GW or SGSN. The local gateway can be local access gateway and/or local serving gateway. The core network gateway can be core network access gateway and/or core network serving gateway. The serving gateway can be local serving gateway and can also be core network serving gateway

In order to simplify the description, the above embodiments only take the situation of Fig. 1 as an example to describe the management manner of local IP access connection. In other situations (such as UTRAN system or there is a home (e)nodeB gateway), it still needs the mobility management entity to determine whether mobility is supported according to the CSG identifier or local gateway information so as to manage the connection of local IP access. In these situations, the management manner of local IP access is similar to the above embodiments and will not affect the description of the present invention, so they will be not be described here repeatedly.

In the above embodiments, in addition to the manners shown in the above embodiments, the manner of the source/target mobility management entity or source/target RAN node acquiring the target local gateway before determining whether mobility is supported can also be acquiring the target local gateway information via the target RAN node identifier, target CSG ID, location identifier, and TAI (Tracking Area ID).

The target local gateway information is the local gateway information supported by the target RAN node/target home (e)nodeB gateway. The target local gateway information can be local gateway identifier or IP address of the local gateway.

When the terminal only has local IP access connection and there is no core network connection, if the mobility management entity determines that mobility cannot be supported, then it can initiate a disconnect operation of the local IP access connection.

The RAN node can be base station(i.e. NodeB or eNodeB), home (e)nodeB, home (e)nodeB gateway, RNC (radio network controller), and traffic offload function entity. The mobility management entity can be MME (mobility management entity), MSC (mobile switching center), SGSN (serving GPRS support node), and home (e)nodeB gateway. The local gateway can be L-SGW and L-PGW, can be L-PGW separately, can be L-GGSN and L-SGSN, can be L-GGSN separately, and can be a traffic offload function entity. The core network access gateway can be S-GW, P-GW, SGSN, and GGSN.

The RAN node IP address of local IP access can be the same as the local gateway address.

The CSG list or CSG identifier which supports mobility can be statically configured on the mobility management entity and can also be sent out by the authentication authorization server or a network management system.

The authentication authorization server can be a subscription profile repository.

The location update can be tracking area update and routing area update.

Preferably, in the embodiments of the present invention, local IP connection refers to local IP access connection.

Local IP access can be a local IP access to residential IP network, a local IP access to enterprise IP network, a local IP access to Internet, a internet offload and a seleted IP traffic offload.

The initial CSG identifier of the user refers to the CSG identifier when this CSG user initially establishes a local IP access connection.

The RAN node can send the information that whether the CSG or CSG list supports mobility to the mobility management entity when being powered up, and the mobility management entity stores this information.

When the mobility management entity receives a notification that the subscription data of the user and the ability of the RAN node/home (e)nodeB gateway change, it needs to determine that the local IP connection changes from supporting mobility to not supporting mobility. The determination method is as follows: when the initial CSG and the target CSG are different, the mobility management entity deems that mobility is not supported, or the mobility management entity determines whether the initial CSG and target CSG belong to the list which supports mobility; and when the initial CSG and the target CSG are the same, it is deemed that mobility is supported or determine whether the initial CSG supports mobility, if not, then disconnect the local IP connection.

During the handover, (the target mobility management entity sends the target local gateway information or the target CSG identifier to the source mobility management entity), or, (the source RAN node sends the target CSG identifier to the source mobility management entity); the source mobility management entity finds that the local IP access supports mobility according to the local gateway information or CSG identifier, then activate/establish/update local IP access connection.

Alternatively,
during the handover, the target mobility management entity sends the initial CSG identifier to the target RAN node, and the target RAN node finds that the local IP access supports mobility according to the CSG identifier, then the mobility management entity activates/establishes/updates local IP access connection.

Alternatively,
during the handover, (the target RAN node sends the target CSG identifier to the target mobility management entity), or, (the source mobility management entity sends the target CSG identifier or local gateway information to the target mobility management entity); the target mobility management entity finds that the local IP access supports mobility according to the local gateway information or CSG identifier, then activate/establish/update local IP access connection.

Alternatively,
during the location update, (the target mobility management entity sends the target CSG identifier to the source mobility management entity), or, (the source mobility management entity sends the initial CSG identifier to the target mobility management entity); the mobility management entity finds that the local IP access supports mobility according to the CSG identifier, then activate/establish/update local IP access connection.

According to the present invention, the source/target mobility management entity or source/target RAN node determines whether the local IP access connection supports mobility according to the CSG identifier or local gateway information, which thus achieves the management operation on the local IP access connection, avoids the waste of system resources and the increasing of system burden and improves the processing efficiency of the mobile communication system.

It needs to be noted that the step shown in the flowcharts of the drawings can be executed in a computer system such as a set of computer executable instructions, and although the logical order is shown in the flowcharts, in some cases the steps shown or described here can be executed in an order different from this in some circumstances.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device. Thus, consequently they can be stored in the storing device and executed by the calculating device, or they are made into integrated circuit module respectively, or a plurality of modules or steps thereof are made into one integrated circuit module. In this way, the present invention is not limited to any particular combination of hardware and software.

Above description is only to illustrate the preferred embodiments but not to limit the present invention. Various alternations and changes to the present invention are apparent to those skilled in the art. The scope defined in claims shall comprise any modification, equivalent substitution and improvement within the spirit and principle of the present invention.

## Claims

1. A method for managing local IP access connection, **characterized by** comprising:
determining whether a local IP access connection supports mobility; and
processing the local IP access connection if it is determined that the local IP access connection supports mobility, wherein the processing includes at least one of: activate, establish and update.

2. The method according to Claim 1, **characterized in that** determining whether the local IP access connection supports mobility comprises:
determining whether the local IP access connection supports mobility according to a closed subscriber group (CSG) identifier or local gateway information.

3. The method according to Claim 1, **characterized in that** during the handover from a source mobility management entity to a target mobility management entity,
determining whether the local IP access connection supports mobility comprises:
the source mobility management entity receiving local gateway information or a CSG identifier from the target mobility management entity, wherein the local gateway information is target local gateway information, and the CSG identifier is a target CSG identifier; and
the source mobility management entity determining whether the local IP access connection supports mobility according to the local gateway information or the CSG identifier; and
processing the local IP access connection comprises:
the source mobility management entity processing the local IP access connection.

4. The method according to Claim 1, **characterized in that** during the handover from a source mobility management entity to a destination mobility management entity,
determining whether the local IP access connection supports mobility comprises:
the source mobility management entity receiving a CSG identifier from a source RAN node, wherein the CSG identifier is a target CSG identifier; and
the source mobility management entity determining whether the local IP access connection supports mobility according to the CSG identifier; and
processing the local IP access connection comprises:
the source mobility management entity processing the local IP access connection.

5. The method according to Claim 1, **characterized in that** during the handover from a source mobility management entity to a target mobility management entity,
determining whether the local IP access connection supports mobility comprises:
the target mobility management entity receiving local gateway information or a CSG identifier from the source mobility management entity, wherein the local gateway information is target local gateway information, and the CSG identifier includes an initial CSG identifier and a target CSG identifier; and
the target mobility management entity determining whether the local IP access connection supports mobility according to the local gateway information or the CSG identifier; and
processing the local IP access connection comprises:
the target mobility management entity processing the local IP access connection.

6. The method according to Claim 1, **characterized in that** during the handover from a source mobility management entity to a target mobility management entity,
determining whether the local IP access connection supports mobility comprises:
the target mobility management entity receiving a CSG identifier from a target RAN node, wherein the CSG identifier is a target CSG identifier; and
the target mobility management entity determining whether the local IP access connection supports mobility according to the CSG identifier; and
processing the local IP access connection comprises:
the target mobility management entity processing the local IP access connection.

7. The method according to Claim 1, **characterized in that** during location update through a source mobility management entity and a target mobility management entity,
determining whether the local IP access connection supports mobility comprises:
the source mobility management entity receiving a CSG identifier from the target mobility management entity, wherein the CSG identifier is a target CSG identifier; and
the source mobility management entity determining whether the local IP access connection supports mobility according to the CSG identifier; and
processing the local IP access connection comprises:
the source mobility management entity processing the local IP access connection.

8. The method according to Claim 1, **characterized in that** during location update through a source mobility management entity and a target mobility management entity,
determining whether the local IP access connection supports mobility comprises:
the target mobility management entity receiving a CSG identifier from the source mobility management entity, wherein the CSG identifier is a CSG identifier when initially establishing the local IP access connection; and
the target mobility management entity determining whether the local IP access connection supports mobility according to the CSG identifier; and
processing the local IP access connection comprises:
the target mobility management entity processing the local IP access connection.

9. The method according to Claim 1, **characterized in that** during the handover from a source mobility management entity to a target mobility management entity,
determining whether the local IP access connection supports mobility comprises:
a target RAN node receiving a CSG identifier from the target mobility management entity, wherein the CSG identifier is a CSG identifier when initially establishing the local IP access connection; and
the target RAN node determining whether the local IP access connection supports mobility according to the CSG identifier; and
processing the local IP access connection comprises:
the target RAN node notifying the source mobility management entity or the target mobility management entity to process the local IP access connection.

10. The method according to any one of Claims 1-9, **characterized in that** determining whether the local IP access connection supports mobility comprises:
determining whether a target CSG identifier is the same as an initial CSG identifier, wherein the initial CSG identifier is a CSG identifier when initially establishing the local IP access connection; and
if they are different, then determining whether the target CSG identifier and the initial CSG identifier belong to a CSG identifier in a CSG list which supports mobility; and
if they are same, then it is determined that the local IP access connection supports mobility.

11. The method according to Claim 10, **characterized in that** determining whether the local IP access connection supports mobility further comprises:
if the target CSG identifier is the same as the initial CSG identifier, then determining whether the target CSG identifier is a CSG identifier which supports mobility; and
if the target CSG identifier is the CSG identifier which supports mobility, then it is determined that the local IP access connection supports mobility.

12. The method according to Claim 3 or 5, **characterized in that** determining whether the local IP access connection supports mobility according to the local gateway information comprises:
determining whether the target gateway information is the same as the local IP access connection of the local IP access connection; and
if they are the same, then it is determined that the local IP access connection supports mobility.

13. The method according to Claim 1, **characterized in that** determining whether the local IP access connection supports mobility comprises:
determining whether there is a connection or interface between a target serving gateway and a source local access gateway, or, determining whether there is a connection or interface between a target RAN node or a target home (e)nodeB gateway and a source local gateway; and
if there is the connection or interface, then it is determined that the local IP access connection supports mobility

14. The method according to any one of Claims 1-9 and 13, **characterized by**, after determining whether the local IP access connection supports mobility, further comprising:
releasing the local IP access connection if it is determined that the local IP access connection does not support mobility.

15. The method according to any one of Claims 2-9, **characterized in that** determining whether the local IP access connection supports mobility comprises:
determining whether the CSG identifier changes; and
if the CSG identifier changes, then a mobility management entity determining that the local IP access connection does not support mobility, or further determining whether the initial CSG identifier and the target CSG identifier of the user belong to a CSG list which supports mobility, and if they belong to the CSG list which supports mobility, then it is determined that the local IP access connection supports mobility; and
if the CSG identifier does not change, then the mobility management entity determining that the local IP access connection supports mobility, or further determining whether the CSG identifier supports mobility, if the CSG identifier supports mobility, then the mobility management entity determines that the local IP access connection supports mobility

16. The method according to Claim 3 or 5, **characterized in that** the target mobility management entity acquires the target local gateway information by the step of:
the target mobility management entity inquiring, via a domain name system server or a management server, to obtain the local gateway information corresponding to the identifier of the RAN node and/or compatible with the established connection type and/or relevant subscription information of local IP access.
